# EUROPEAN PATENT APPLICATION

(11) **EP 4 779 492 A1**
(43) Date of publication of application: **22.07.2026**
(21) Application number: 24945399.4
(22) Date of filing: 23.12.2024
(51) Int. Cl.: G06F 16/54

(54) **PICTURE DISPLAY METHOD, ELECTRONIC DEVICE AND COMPUTER-READABLE STORAGE MEDIUM**

(30) Priority: 20.06.2024 CN 202410808248
(71) Applicant: HUAWEI TECHNOLOGIES CO., LTD., Shenzhen 518129 (CN)
(72) Inventor: ZHU, Yanming, Shenzhen, Guangdong 518129 (CN); MAO, Feng, Shenzhen, Guangdong 518129 (CN); REN, Jie, Shenzhen, Guangdong 518129 (CN); LV, Ting, Shenzhen, Guangdong 518129 (CN)
(74) Representative: Maiwald GmbH
(86) International application number: PCT/CN2024/141504
(87) International publication number: WO 2025/260675

(57) **Abstract**

A picture display method, an electronic device, and a computer-readable storage medium are disclosed. An electronic device obtains target information related to interface content of an application in response to a target operation used to upload a picture; obtains a target candidate picture set of each target element from a picture set based on a first picture quantity and the target information, where the target element is determined based on the target information, the target candidate picture set includes at least one target candidate picture, a total quantity of target candidate pictures of all target elements is less than or equal to the first picture quantity, and the first picture quantity is a quantity of pictures that a first-screen interface of a picture selection interface is able to display; and displays the target candidate picture of each target element on the first-screen interface..

## Description

This application claims priority to Chinese Patent Application No. 202410808248.4, filed with the China National Intellectual Property Administration on June 20, 2024 and entitled "PICTURE DISPLAY METHOD, ELECTRONIC DEVICE, AND COMPUTER-READABLE STORAGE MEDIUM", which is incorporated herein by reference in its entirety.

### TECHNICAL FIELD

This application relates to the field of terminal technologies, and in particular, to a picture display method, an electronic device, and a computer-readable storage medium.

### BACKGROUND

With increasingly powerful and abundant functions of an electronic device, for example, a mobile phone, a user needs to upload a picture in an increasing quantity of applications on the electronic device.

When the user needs to upload a picture, the user may perform picture selection on a picture interface displayed on the electronic device, to select the picture that needs to be uploaded. For example, when the user uses a social application to post social content, if the user needs to insert a picture into the social content, the user needs to select, from an album of the mobile phone, the picture that needs to be uploaded to the social application.

However, the electronic device usually stores a large quantity of pictures. It is difficult and takes a long time to select, from the large quantity of pictures, the picture that needs to be uploaded, leading to poor user experience.

### SUMMARY

This application provides a picture display method, an electronic device, and a computer-readable storage medium, to enable a user to easily and quickly select a picture that needs to be uploaded.

According to a first aspect, an embodiment of this application provides a picture display method. The method includes: An electronic device displays an interface of an application; obtains target information of the application in response to a target operation on the interface of the application, where the target information is related to interface content of the application, and the target operation is used to upload a picture; obtains a target candidate picture set of each target element from a picture set based on a first picture quantity and the target information, where the target element is determined based on the target information, the target candidate picture set includes at least one target candidate picture, a total quantity of target candidate pictures of all target elements is less than or equal to the first picture quantity, and the first picture quantity is a quantity of pictures that a first-screen interface of a picture selection interface is able to display; and displays the target candidate picture of each target element on the first-screen interface.

It can be learned from the foregoing descriptions that, in this embodiment of this application, the target candidate picture of each target element is obtained from the picture set based on the target information related to the interface content of the application, to obtain a picture related to the interface content of the application. Further, a picture quantity of target candidate pictures of each target element is properly determined based on the quantity of pictures that the first-screen interface is able to display. In this way, the total quantity of target candidate pictures of all the target elements is less than or equal to the first picture quantity, and the target candidate pictures of all the target elements can be displayed on the first-screen interface. In this way, a user can obtain pictures of a plurality of target elements on the first-screen interface, without turning pages to obtain the pictures of the target elements, so that the user can more easily and quickly select a picture that needs to be uploaded. This improves user experience.

The picture that the user needs to upload is usually related to the interface content of the application. In this embodiment of this application, the target candidate picture of each target element is obtained, and target candidate pictures of a plurality of target elements are displayed on the first-screen interface, so that a picture displayed on the first-screen interface is quite probably the picture that the user needs upload.

In some possible implementations of the first aspect, if at least two target elements are included, the at least two target elements include a first target element and a second target element. In a process of displaying the target candidate picture of each target element on the first-screen interface, the electronic device may display a target candidate picture of the first target element and a target candidate picture of the second target element on the first-screen interface based on a priority of the first target element and a priority of the second target element, where the priority of the first target element is higher than the priority of the second target element, and a display position of the target candidate picture of the first target element is in front of a display position of the target candidate picture of the second target element.

In this way, a picture related to a target element with a high priority can be preferentially displayed (to be specific, a display interface on the first-screen interface is closer to the front), and pictures related to each target element can be further displayed in an aggregate manner (to be specific, the pictures related to the target element are displayed next to each other). This further improves convenience of selecting a picture by the user.

In some possible implementations of the first aspect, the first target element among the target elements includes a first sub-element and a second sub-element. In this case, in a process of displaying the target candidate picture of each target element on the first-screen interface, the electronic device may display a picture of the first sub-element and a picture of the second sub-element on the first-screen interface based on a priority of the first sub-element and a priority of the second sub-element, where the priority of the first sub-element is higher than the priority of the second sub-element, a display position of the picture of the first sub-element is in front of a display position of the picture of the second sub-element, and the target candidate picture of the first target element includes the picture of the first sub-element and the picture of the second sub-element.

In this way, a picture related to a sub-element with a high priority can be preferentially displayed, and pictures related to each sub-element can be further displayed in an aggregate manner. This further improves convenience of selecting a picture by the user.

In some possible implementations of the first aspect, the electronic device may further display a tab page of the target element or a tab page of a sub-element on the picture selection interface, where the tab page of the target element includes the target candidate picture of the target element, and the tab page of the sub-element includes a picture of the sub-element. In this way, the user can obtain, from the tab page, a picture related to the target element or the sub-element. This further improves convenience of selecting a picture by the user.

In some possible implementations of the first aspect, in a process of obtaining the target candidate picture set of each target element from the picture set based on the first picture quantity and the target information, the electronic device may obtain a candidate picture set of each target element from the picture set based on the target information; and for each target element, select the target candidate picture from the candidate picture set, where a quantity of selected target candidate pictures is determined based on the first picture quantity, and the quantity of selected target candidate pictures is a quantity of pictures of the target element that are displayed on the first-screen interface.

In this implementation, a quantity of pictures to be displayed on the first-screen interface is allocated to each target element based on the quantity of pictures that the first-screen interface is able to display, and a corresponding quantity of pictures are selected for each target element, so that pictures of a plurality of target elements can be displayed on the first-screen interface.

In some possible implementations of the first aspect, in a process of selecting the target candidate picture from the candidate picture set, the electronic device may perform similar-picture clustering on the candidate picture set to obtain a similar-picture set; for each similar-picture set, sort similar pictures in the similar-picture set, and then select a preset quantity of similar pictures that are ranked top, where the preset quantity of similar pictures that are ranked top are target similar pictures in the similar-picture set; and select the target candidate picture from the target similar pictures in each similar-picture set and a candidate picture that is not clustered into the similar-picture set.

In this implementation, similar pictures are clustered, the target similar pictures are selected from the similar pictures based on sorting of the similar pictures, and then the target candidate picture is selected based on the target similar pictures and the unclustered picture, so that a quantity of repeated similar pictures in the selected target candidate picture is minimized. This reduces interference caused by repeated similar pictures to the user during picture selection, and further improves convenience of selecting a picture by the user.

In some possible implementations of the first aspect, in a process of sorting the similar pictures in the similar-picture set, the electronic device may score the similar pictures based on at least one of compositions, colors, and definition of the similar pictures, to obtain scores of the similar pictures; and sort the similar pictures based on the scores of the similar pictures. In this way, similar pictures in a same cluster are scored through calculation based on information such as compositions, colors, and the definition, and are sorted based on scores, so that a picture with higher quality can be better selected from a plurality of similar pictures, and the picture with higher quality is preferentially displayed, to reduce interference caused by repeated similar pictures to the user during picture selection.

In some possible implementations of the first aspect, on the picture selection interface, a display position of the target similar picture in the similar-picture set is in front of a display position of a non-target similar picture in the similar-picture set. In this way, a preferred picture (namely, the target similar picture) among a plurality of repeated similar pictures is preferentially displayed (to be specific, a display position of the preferred picture is closer to the front). This can reduce interference caused by repeated similar pictures to the user during picture selection, and further improve convenience of selecting a picture by the user.

In some possible implementations of the first aspect, if the target element includes at least two sub-elements, the electronic device may separately perform similar-picture clustering on pictures of the sub-elements to obtain a similar-picture set of each sub-element, where the candidate picture set includes the pictures of the sub-elements.

In some possible implementations of the first aspect, the target information is text information obtained based on the interface content of the application.

In some possible implementations of the first aspect, the target element is an event described in the target information, an object in an event described in the target information, a keyword in the target information, or a category of an object described by a keyword in the target information.

In some possible implementations of the first aspect, the target element is an event or an object in an event. In a process of obtaining the candidate picture set of each target element from the picture set based on the target information, the electronic device may extract event information of the event from the target information; and perform picture searching in the picture set by using the event information, to obtain a candidate picture set of each event or the object in the event.

In some possible implementations of the first aspect, when at least two events are included, the electronic device may further determine importance of each event, and sort the at least two events by priority based on the importance of each event. In this way, a picture of an event of high importance is preferentially displayed, to improve convenience of selecting a picture by the user.

In some possible implementations of the first aspect, if the target element is an event, and if the electronic device obtains no picture matching the event information when performing picture searching in the picture set based on the event information of the event, the electronic device may further perform picture searching in the picture set again based on target event information, where the target event information is event information obtained by removing information of one or more dimensions from the event information.

In this implementation, when no matching picture is found based on the event information, intelligent rollback may be performed. To be specific, the information of one or more dimensions is removed, and then matching and searching are performed again, to obtain a picture result. This avoids poor user experience due to a failure to obtain a search result.

In some possible implementations of the first aspect, the target element is a category of an object described by a keyword. In a process of obtaining the candidate picture set of each target element from the picture set based on the target information, the electronic device may perform picture searching based on the keyword in the target information, to obtain a search result of the keyword; and classify the search result of the keyword to obtain a target candidate picture set of each category.

According to a second aspect, an embodiment of this application provides a picture display method. In the method, an electronic device displays an interface of an application; obtains target information of the application in response to a target operation on the interface of the application, where the target information is related to interface content of the application, and the target operation is used to upload a picture; obtains a picture of each target element from a picture set based on the target information, where the target element is determined based on the target information; determines a priority of each of at least two target elements; and displays a picture of each target element on a picture selection interface based on the priority of the target element, where the at least two target elements include a first target element and a second target element, a priority of the first target element is higher than a priority of the second target element, and a display position of a picture of the first target element on the picture selection interface is in front of a display position of a picture of the second target element on the picture selection interface.

It can be learned from the foregoing descriptions that, in this embodiment of this application, all target elements are sorted by priority, and a display position of a picture related to a target element with a high priority is in front of a display position of a picture related to a target element with a low priority, so that the picture related to the target element with a high priority is preferentially displayed. This improves convenience of selecting a picture by a user.

In some possible implementations of the second aspect, the first target element among the target elements includes a first sub-element and a second sub-element, a priority of the first sub-element is higher than a priority of the second sub-element, a display position of a picture of the first sub-element on the picture selection interface is in front of a display position of a picture of the second sub-element on the picture selection interface, and the picture of the target element includes the picture of the first sub-element and the picture of the second sub-element. In this way, a picture related to a sub-element with a high priority can be preferentially displayed, to further improve convenience of selecting a picture by the user.

In some possible implementations of the second aspect, in a process of obtaining the picture of each target element from the picture set based on the target information, the electronic device may obtain a candidate picture set of each target element from the picture set based on the target information; for each target element, cluster candidate pictures in the candidate picture set of the target element, to obtain at least one similar-picture set; for each similar-picture set, sort similar pictures in the similar-picture set, and then select a preset quantity of similar pictures that are ranked top, where the preset quantity of similar pictures that are ranked top are target similar pictures in the similar-picture set; and for each target element, select the picture of the target element from the target similar pictures in the similar-picture set and a candidate picture that is not clustered into the similar-picture set.

In this implementation, similar pictures are clustered, and the target similar pictures are selected from the similar pictures based on sorting of the similar pictures. This reduces interference caused by repeated similar pictures to the user during picture selection, and further improves convenience of selecting a picture by the user.

In some possible implementations of the second aspect, the target information is text information obtained based on the interface content of the application.

In some possible implementations of the second aspect, the target element is an event described in the target information, an object in an event described in the target information, a keyword in the target information, or a category of an object described by a keyword in the target information.

In some possible implementations of the second aspect, when the target element is an event or an object in an event, the electronic device may extract event information of the event from the target information, and select a picture of each event or a picture of each object in an event from the picture set by using the event information.

In some possible implementations of the second aspect, when the target element is a category of an object described by a keyword, the electronic device may select a picture of the keyword from the picture set by using the keyword, and then classify a search result of the picture of the keyword to obtain a picture of each category.

In some possible implementations of the second aspect, when the target element is a keyword, a priority of each keyword is determined based on an input order of keywords. A keyword input earlier has a higher priority than a keyword input later.

In some possible implementations of the second aspect, when the target element is an event, importance of each event is determined based on at least one of the following: event content completeness, description complexity, time and location precision, and a distance between a position of the event and a position at which a cursor is inserted. An event of higher importance has a higher priority.

According to a third aspect, an embodiment of this application provides a picture display method. The method includes: An electronic device displays an interface of an application; obtains target information from the application, where the target information is information sent by the application in response to a target operation on the interface of the application, the target information is related to interface content of the application, and the target operation is used to upload a picture; obtains a target candidate picture set of each target element from a picture set based on a first picture quantity and the target information, where the target element is determined based on the target information, the target candidate picture set includes at least one target candidate picture, a total quantity of target candidate pictures of all target elements is less than or equal to the first picture quantity, and the first picture quantity is a quantity of pictures that a first-screen interface of a picture selection interface is able to display; and displays the target candidate picture of each target element on the first-screen interface.

According to a fourth aspect, an embodiment of this application provides a picture display method. In the method, an electronic device displays an interface of an application; obtains target information from the application, where the target information is information sent by the application in response to a target operation on the interface of the application, the target information is related to interface content of the application, and the target operation is used to upload a picture; obtains a picture of each target element from a picture set based on the target information, where the target element is determined based on the target information; determines a priority of each of at least two target elements; and displays a picture of each target element on a picture selection interface based on the priority of the target element, where the at least two target elements include a first target element and a second target element, a priority of the first target element is higher than a priority of the second target element, and a display position of a picture of the first target element on the picture selection interface is in front of a display position of a picture of the second target element on the picture selection interface.

According to a fifth aspect, an embodiment of this application provides an electronic device, including a memory, a processor, and a computer program stored in the memory and capable of running in the processor. When the processor executes the computer program, the method according to any one of the first aspect, the second aspect, the third aspect, or the fourth aspect is implemented.

According to a sixth aspect, an embodiment of this application provides a computer-readable storage medium. The computer-readable storage medium stores a computer program. When the computer program is executed by a processor, the method according to any one of the first aspect, the second aspect, the third aspect, or the fourth aspect is implemented.

According to a seventh aspect, an embodiment of this application provides a chip system. The chip system includes a processor. The processor is coupled to a memory. The processor executes a computer program stored in the memory, to implement the method according to any one of the first aspect, the second aspect, the third aspect, or the fourth aspect. The chip system may be a single chip or a chip module including a plurality of chips.

According to an eighth aspect, an embodiment of this application provides a computer program product. When the computer program product is run on an electronic device, the electronic device is enabled to perform the method according to any one of the first aspect, the second aspect, the third aspect, or the fourth aspect.

It can be understood that, for beneficial effects of the second aspect to the eighth aspect, reference may be made to related descriptions in the first aspect. Details are not described herein again.

### BRIEF DESCRIPTION OF DRAWINGS

FIG. 1A-1 to FIG. 1A-5 are a diagram of a picture upload scenario according to an embodiment of this application;
FIG. 1B-1 and FIG. 1B-2 are another diagram of a picture upload scenario according to an embodiment of this application;
FIG. 2 is a diagram of a structure of an electronic device 200 according to an embodiment of this application;
FIG. 3A-1 and FIG. 3A-2 are a diagram of picture display based on a plurality of subcategories of a single keyword according to an embodiment of this application;
FIG. 3B-1 and FIG. 3B-2 are a diagram of tab pages of subcategories according to an embodiment of this application;

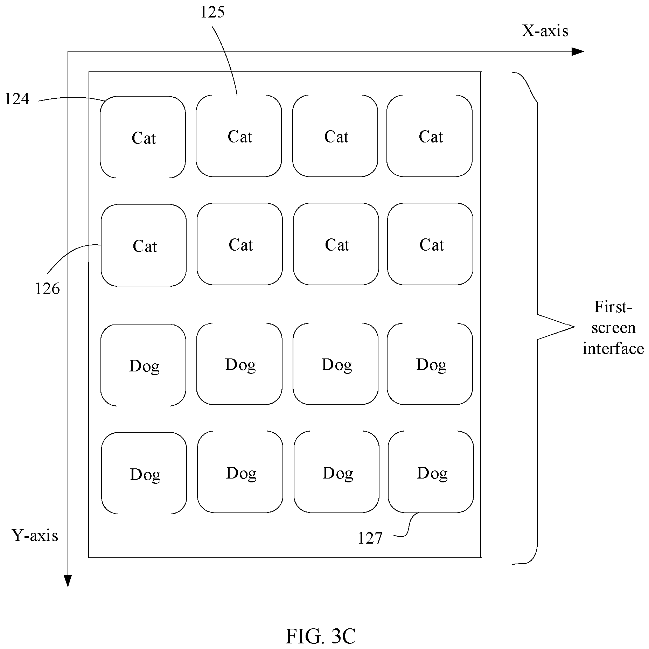

FIG. 3C is a diagram of an order of display positions on a first-screen interface according to an embodiment of this application;

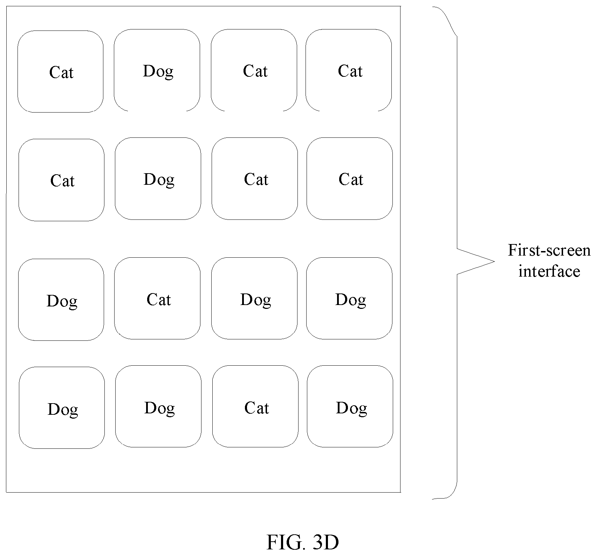

FIG. 3D is a diagram of non-aggregate display according to an embodiment of this application;

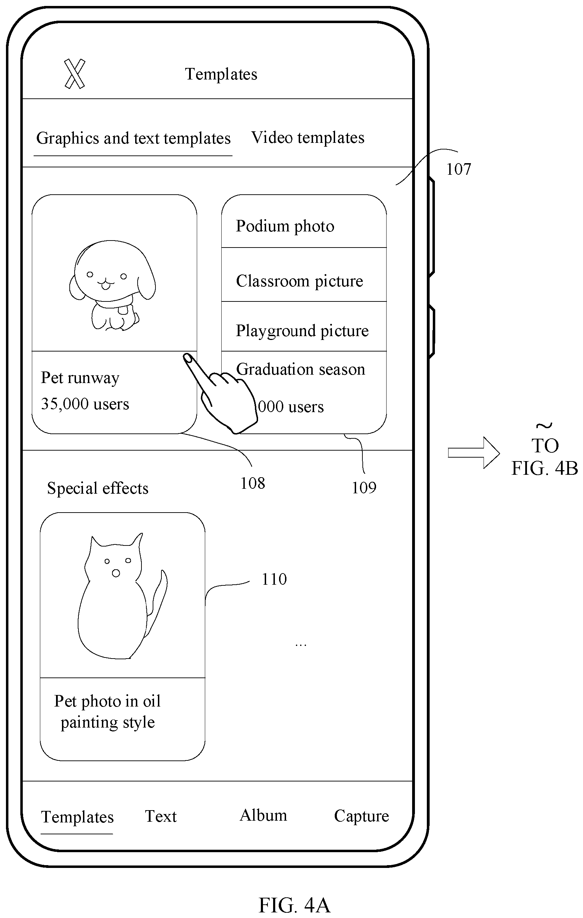

FIG. 4A to FIG. 4C are a diagram of picture display based on a plurality of subcategories of a single keyword according to an embodiment of this application;
FIG. 5A-1 to FIG. 5A-3 are a diagram of picture display based on a plurality of keywords according to an embodiment of this application;
FIG. 5B-1 and FIG. 5B-2 are a diagram of tab pages of subcategories of a keyword according to an embodiment of this application;
FIG. 6A-1 and FIG. 6A-2 are a diagram of picture display based on a plurality of categories of a single event according to an embodiment of this application;

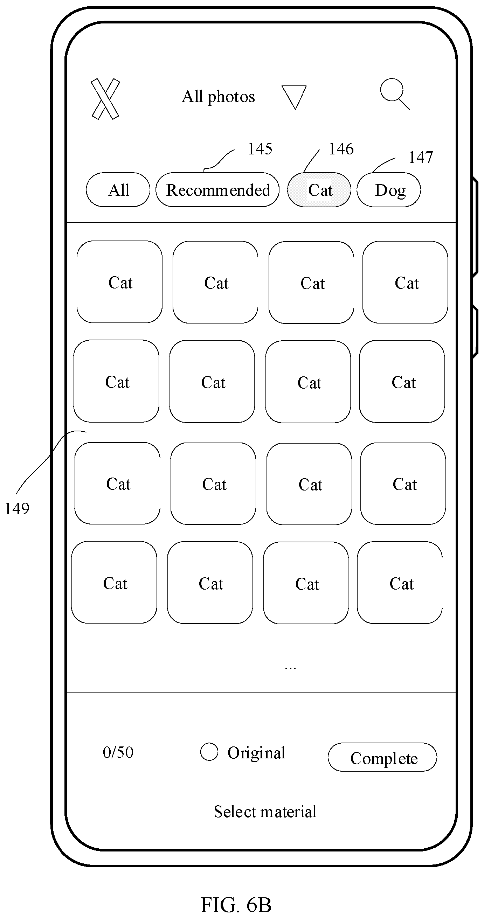

FIG. 6B is a diagram of a cat tab page according to an embodiment of this application;

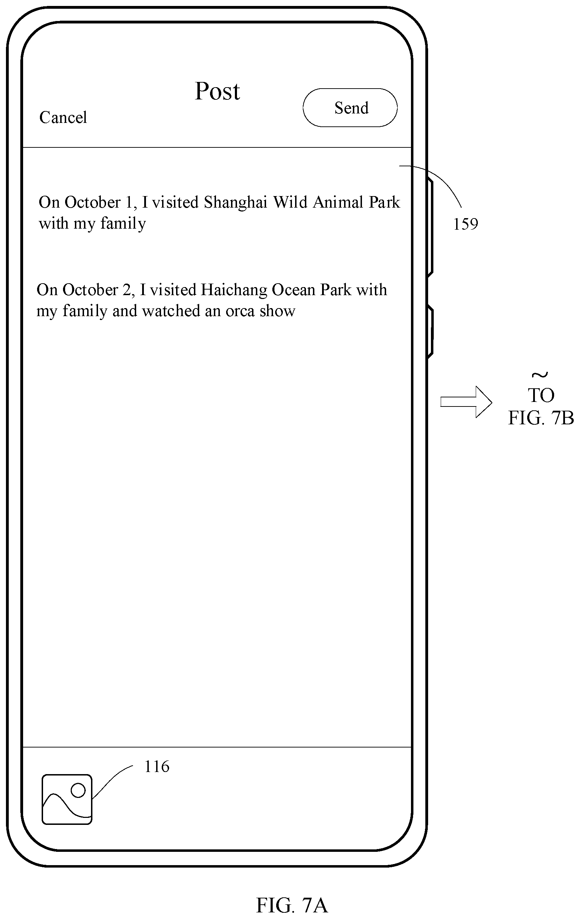

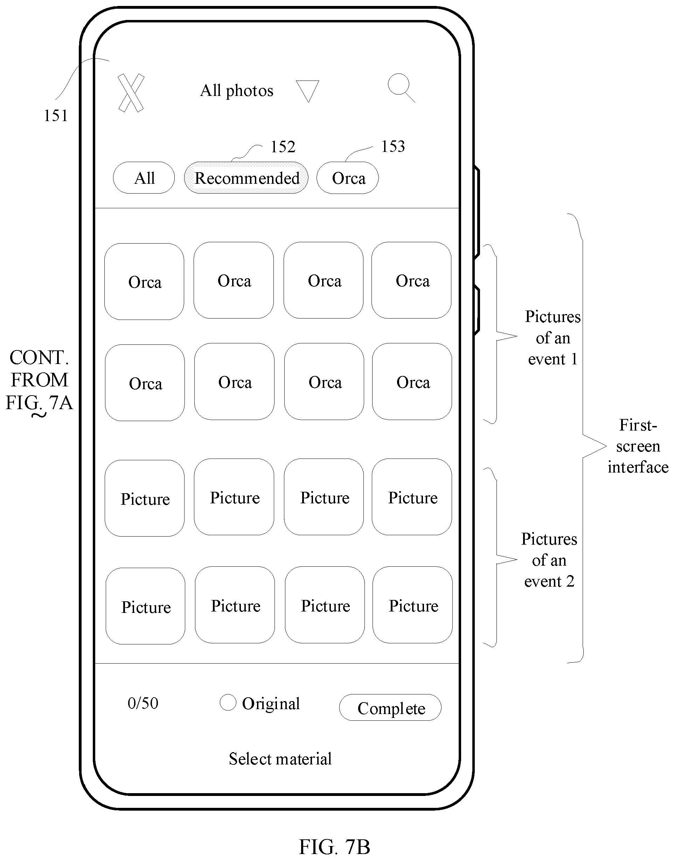

FIG. 7A and FIG. 7B are a diagram of picture display based on a plurality of events according to an embodiment of this application;

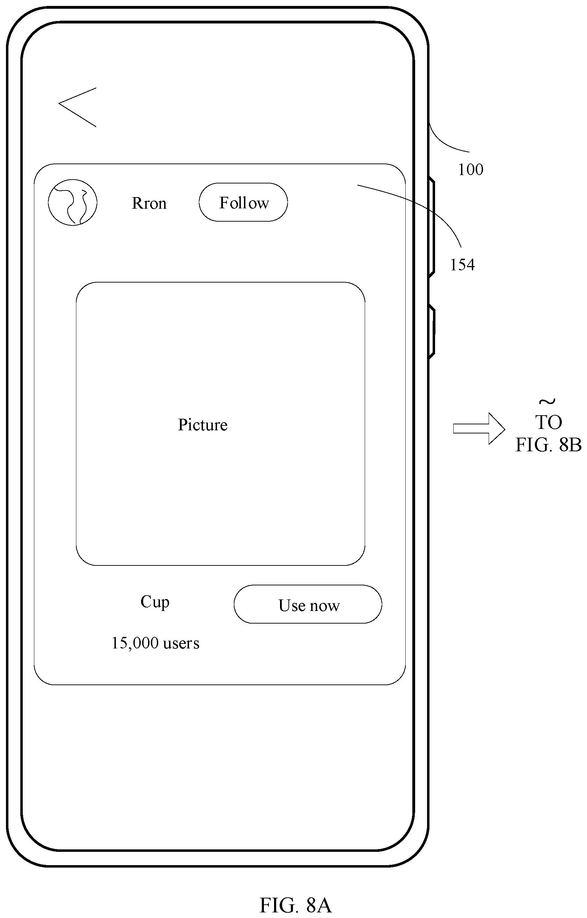

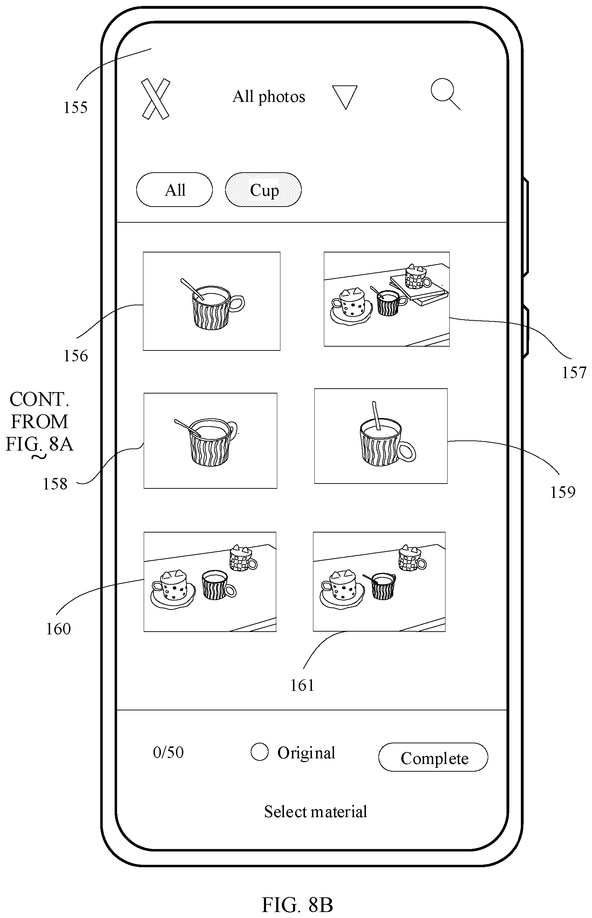

FIG. 8A and FIG. 8B are a diagram of optimizing sorting of similar pictures according to an embodiment of this application;

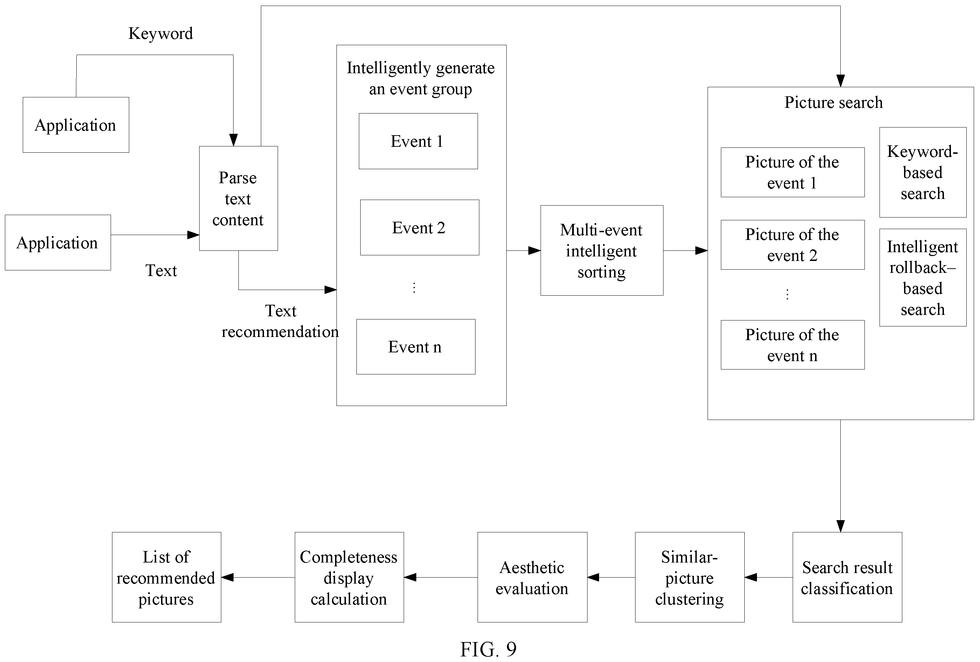

FIG. 9 is a block diagram of a process of picture recommendation and display based on a keyword and text content according to an embodiment of this application;

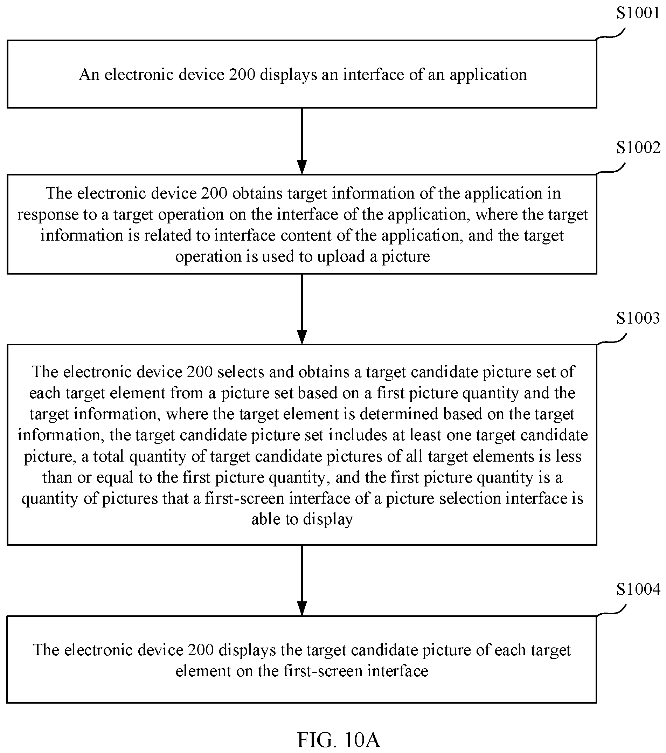

FIG. 10A is a block diagram of a process of a picture display method according to an embodiment of this application;

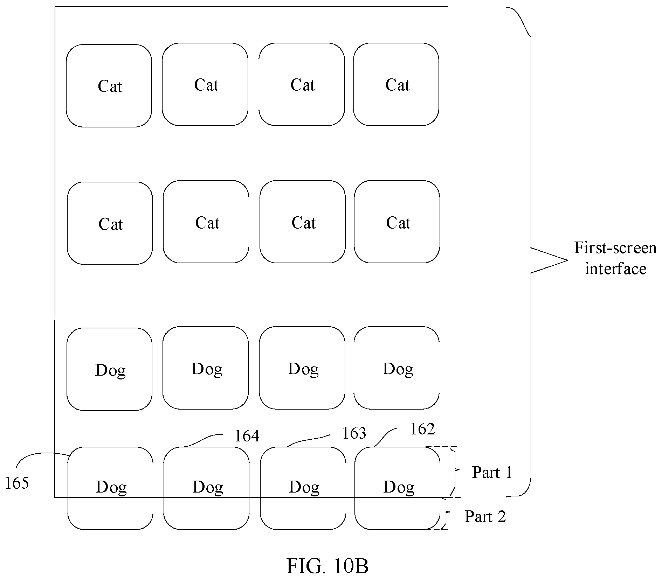

FIG. 10B is a diagram of picture display on a first-screen interface according to an embodiment of this application; and

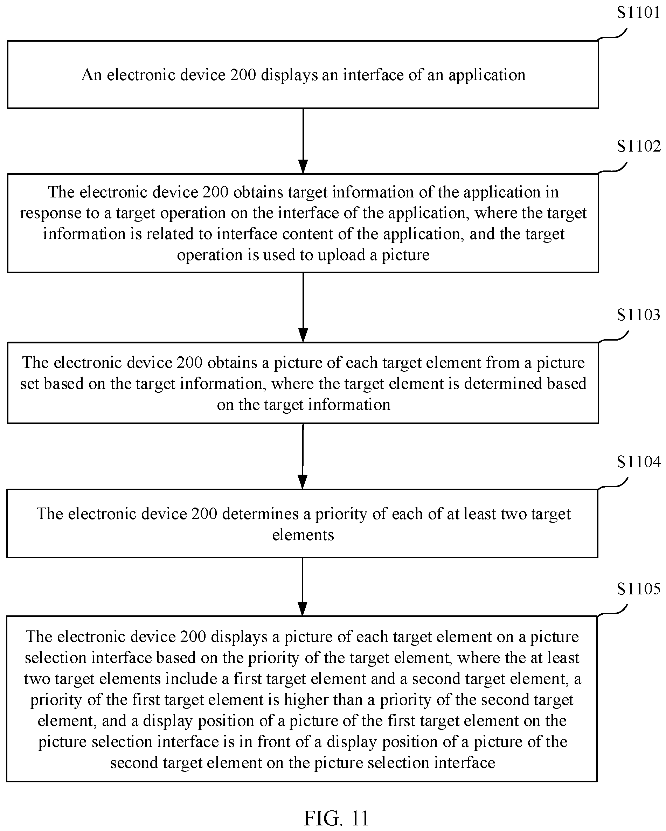

FIG. 11 is a block diagram of a process of a picture display method according to an embodiment of this application.

### DESCRIPTION OF EMBODIMENTS

In the following descriptions, for illustration instead of limitation, specific details such as a particular system structure and a technology are provided for a thorough understanding of embodiments of this application.

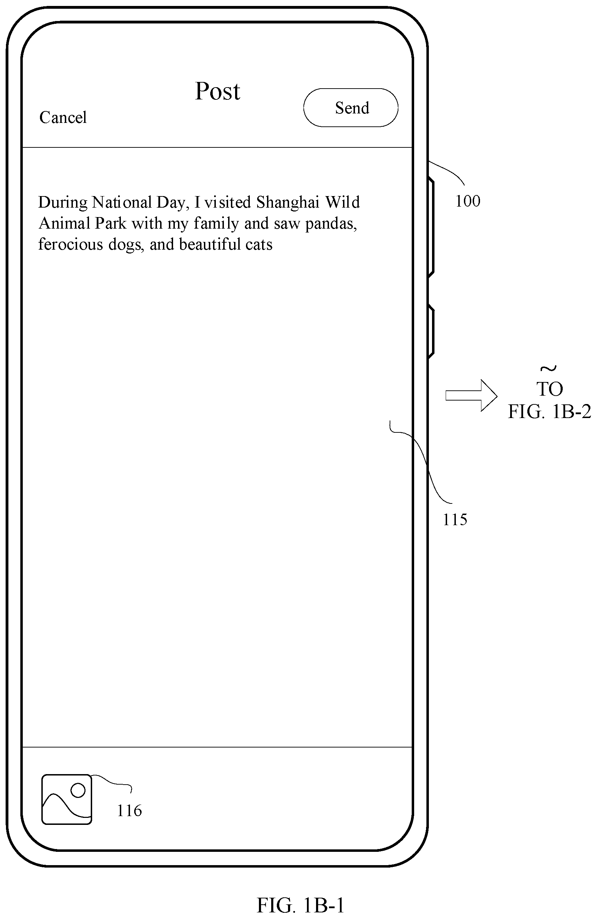

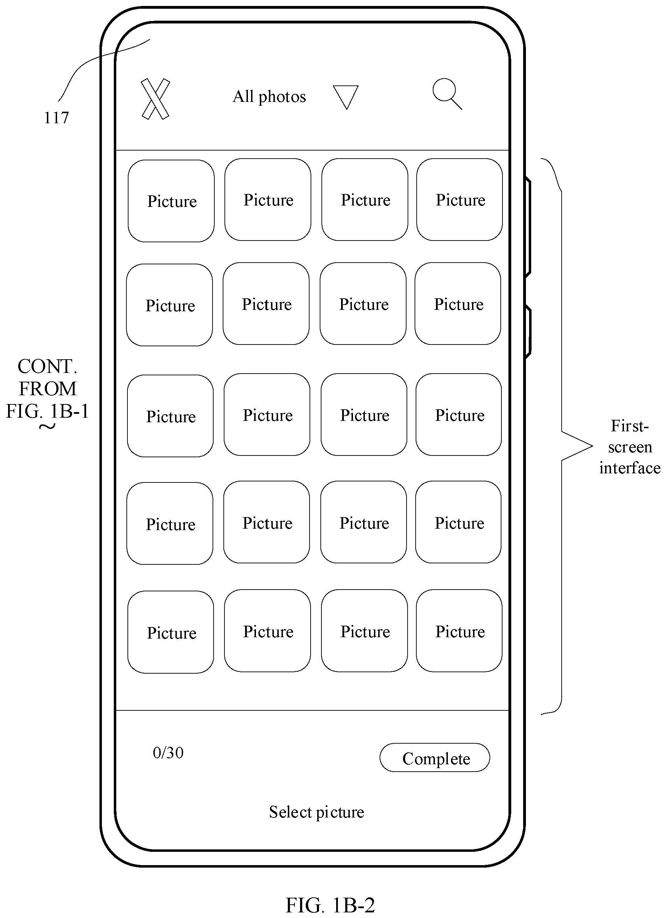

The following describes an example picture upload scenario with reference to FIG. 1A-1 to FIG. 1A-5, FIG. 1B-1, and FIG. 1B-2. FIG. 1A-1 to FIG. 1A-5 are a diagram of a picture upload scenario according to an embodiment of this application. FIG. 1B-1 and FIG. 1B-2 are another diagram of a picture upload scenario according to an embodiment of this application.

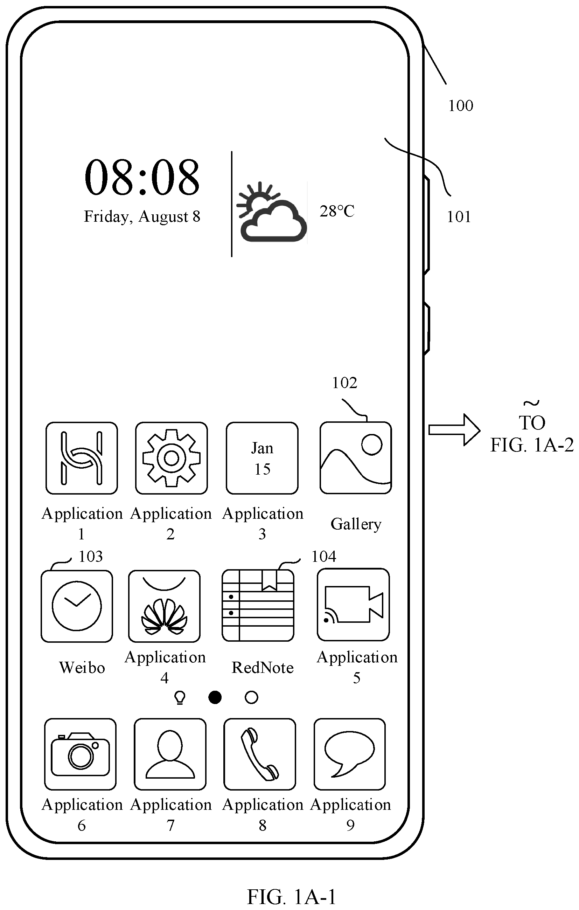

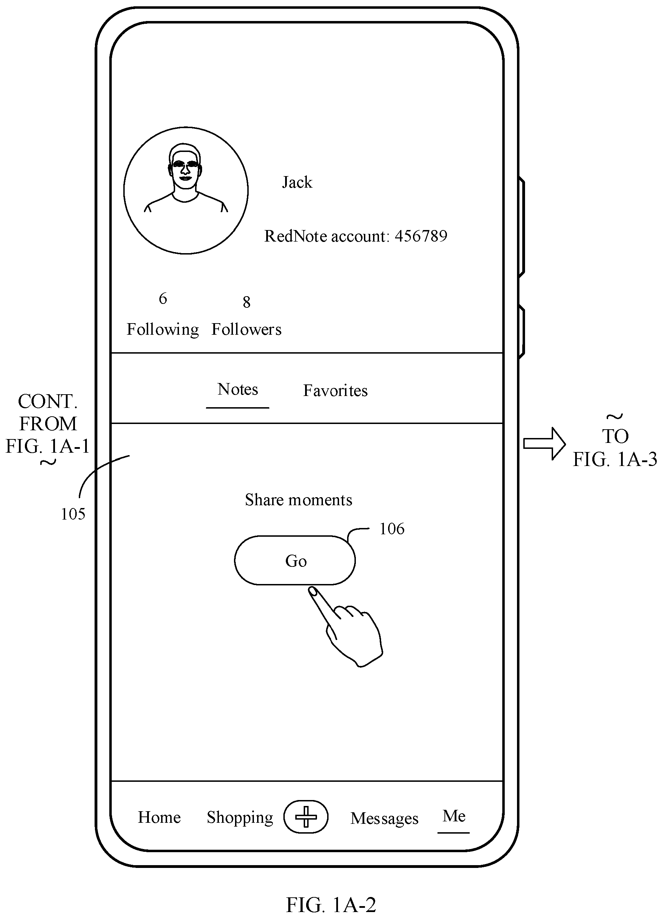

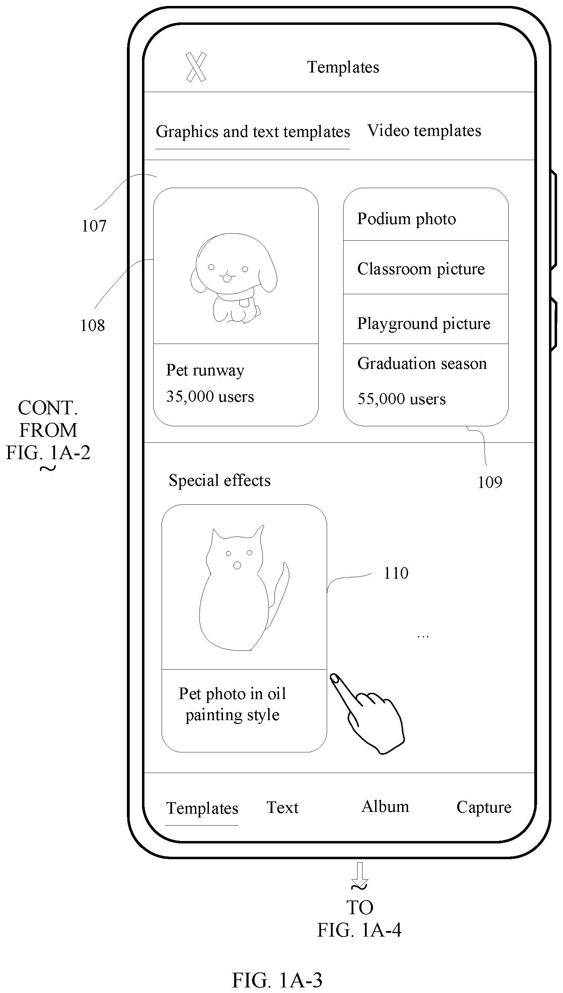

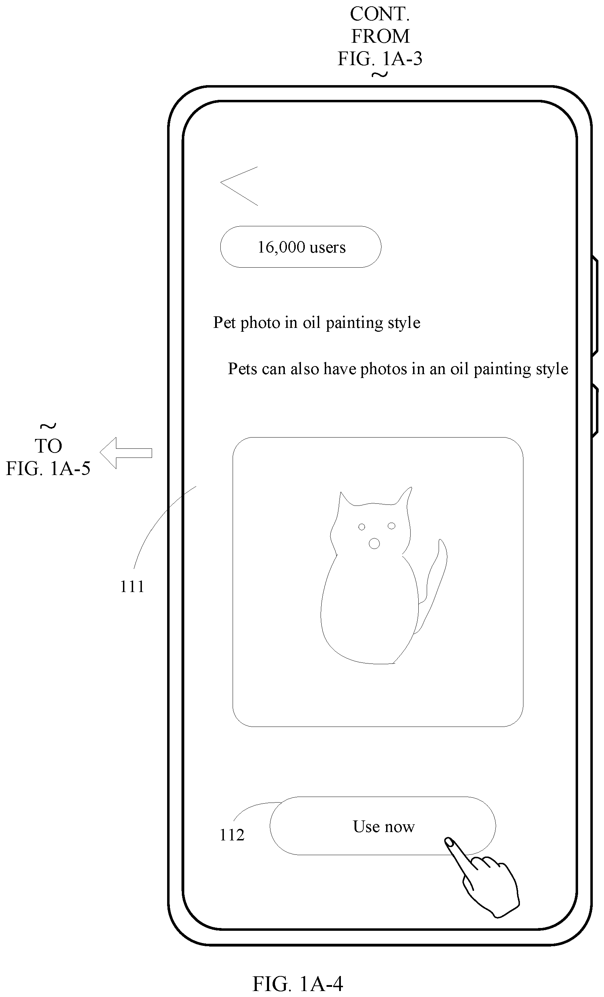

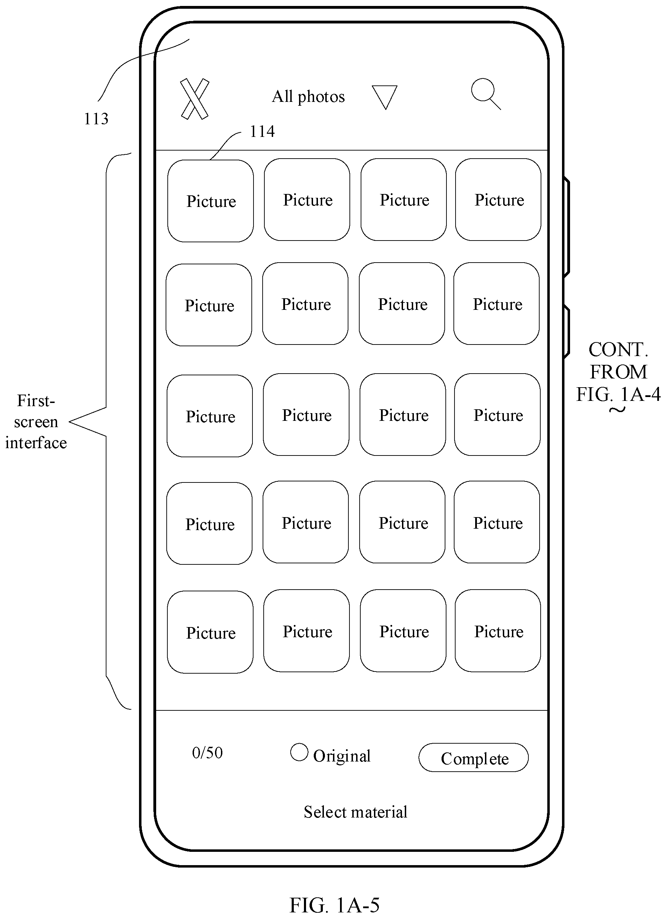

As shown in FIG. 1A-1, icons of applications, such as Application 1 to Application 9, Gallery 102, Weibo 103, and RedNote^{®} 104, are displayed on a home screen 101 of a mobile phone 100. In other embodiments, Gallery 102 may also be referred to as an album. Weibo^{®} 103 and RedNote^{®} 104 are third-party social applications.

After a user taps an icon of RedNote 104, the mobile phone 100 starts RedNote 104 in response to the tap operation for Gallery 102, and displays an interface of RedNote 104. A personal information interface 105 of RedNote 104 includes a note creation button 106. After the user taps the note creation button 106, the mobile phone 100 displays a graphics and text template interface 107 in response to the tap operation.

The graphics and text template interface 107 includes a plurality of templates such as a graphics and text template 108, a graphics and text template 109, and a graphics and text template 110. If the user wants to use the graphics and text template 110 to create a note, the user taps the graphics and text template 110. The mobile phone 100 displays a details interface 111 of the graphics and text template 110 in response to the tap operation for the graphics and text template 110.

The details interface 111 includes a "Use now" button 112. After the user taps the "Use now" button 112, the mobile phone displays a picture selection interface 113 in response to the tap operation. A plurality of pictures are displayed on a first-screen interface of the picture selection interface 113. The user may select a picture that needs to be uploaded from the first-screen interface and an interface on another page (a non-first-screen interface) of the picture selection interface 113, and tap a "Complete" button on the picture selection interface 113 to insert the selected picture into a created note, to be specific, upload the selected picture to RedNote 104.

During specific application, RedNote 104 may invoke a picture selector to obtain a picture in Gallery 102, and display the obtained picture on the picture selection interface 113. Pictures on the picture selection interface 113 are usually displayed based on an order of picture time. Picture time closer to current time corresponds to a display position closer to the front on the picture selection interface 113. For example, picture time of the first picture (namely, a picture 114) on the first-screen interface is closest to the current time, and the first picture is displayed in a frontmost position.

When the user selects, on the picture selection interface 113, the picture that needs to be uploaded, if the picture that needs to be uploaded is not displayed on the first-screen interface, the user needs to perform a page turning operation on a screen of the mobile phone 100, to switch to another interface of the picture selection interface 113, and select a picture from pictures displayed on the another interface.

As shown in FIG. 1B-1, the mobile phone 100 displays a Weibo post creation interface 115. The Weibo post creation interface 115 includes a picture insertion button 116. The user may tap the picture insertion button 116 to insert a picture into a created Weibo post. The user may tap an icon of Weibo 103, to trigger the mobile phone 100 to start Weibo 103 and display an interface of Weibo 103.

After the user taps the picture insertion button 116, the mobile phone 100 displays a picture selection interface 117 in response to the tap operation. A plurality of pictures are displayed on a first-screen interface of the picture selection interface 117. The user may select a picture that needs to be uploaded from the first-screen interface and an interface on another page of the picture selection interface 117, and tap a "Complete" button on the picture selection interface 117 to insert the selected picture into the created Weibo post, to be specific, upload the selected picture to Weibo 103.

During specific application, Weibo 103 may invoke a picture selector to obtain a picture in Gallery 102, and display the obtained picture on the picture selection interface 117. Pictures on the picture selection interface 117 are usually displayed based on an order of picture time.

It should be understood that picture selection interfaces of different applications are usually not completely the same. For example, the picture selection interface 117 of Weibo 103 is not completely the same as the picture selection interface 113 of RedNote 104.

FIG. 1A-1 to FIG. 1A-5 show a scenario in which a picture is inserted into a note created in RedNote 104. FIG. 1B-1 and FIG. 1B-2 show a scenario in which a picture is inserted into a Weibo post created in Weibo 103. Both the note creation and the Weibo post creation may be considered as copywriting. Therefore, FIG. 1A-1 to FIG. 1A-5, FIG. 1B-1, and FIG. 1B-2 may be considered as a scenario in which a picture is inserted into a created copy during copywriting.

It should be understood that the picture upload scenarios mentioned in FIG. 1A-1 to FIG. 1A-5, FIG. 1B-1, and FIG. 1B-2 are merely examples, and do not constitute a limitation on a picture upload scenario. For example, in some file management scenarios or picture editing scenarios, a picture also needs to be uploaded to an application.

For example, in embodiments of this application, an application in which a user needs to upload a picture may include but is not limited to a social application, an e-commerce application, a file management application, and a picture editing application. The social application may include, for example, RedNote 104 and Weibo 103.

The inventors find during research that, in a picture upload scenario, when pictures are displayed on a picture selection interface based on an order of picture time, a user needs to spend a large amount of time locating a picture that needs to be uploaded from massive pictures, leading to low efficiency and poor user experience.

For example, in FIG. 1A-1 to FIG. 1A-5, FIG. 1B-1, and FIG. 1B-2, when a picture is to be inserted during copywriting, pictures are displayed on a picture selection interface based on an order of picture time. In this case, if a picture that a user needs to upload is a pictured saved one month ago or one year ago, the picture that needs to be uploaded is not displayed on a first-screen interface, but is displayed on a later page. In this case, after triggering the mobile phone 100 to display the picture selection interface, the user cannot select the picture that needs to be uploaded from the first-screen interface, but needs to slowly slide on the picture selection interface to locate the picture that needs to be uploaded. It is difficult and takes a long time to locate the picture. In addition, the pictures displayed on the picture selection interface according to the order of the picture time are in disorder. This also increases difficulty and time consumption in locating, by the user, the picture that needs to be uploaded.

In view of related problems mentioned above, embodiments of this application provide a picture display solution. When a user performs a picture upload operation on an interface of an application in which a picture needs to be uploaded, target information related to the interface of the application in which a picture needs to be uploaded is obtained. Target candidate pictures of a plurality of target elements are obtained from a picture set based on the target information and a quantity of pictures that a first-screen interface of a picture selection interface is able to display, where a total quantity of target candidate pictures of the plurality of target elements is less than or equal to the quantity of pictures that the first-screen interface is able to display, and the target elements are determined based on the target information. The target candidate pictures of the plurality of target elements are displayed on the first-screen interface. In this way, the user can obtain pictures of the plurality of target elements on the first-screen interface, without turning pages to locate the pictures of the target elements, improving the ease of picture selection.

The picture display solution provided in embodiments of this application may be applied to an electronic device, for example, a mobile phone, a tablet computer, a vehicle head unit, or a notebook computer. A specific type and a specific structure of the electronic device are not limited herein.

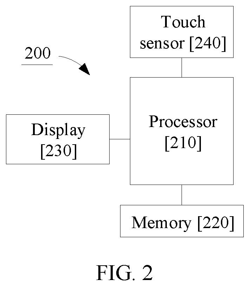

For example, FIG. 2 is a diagram of a structure of an electronic device 200 according to an embodiment of this application. The electronic device 200 may include but is not limited to a processor 210, a memory 220, a display 230, and the like. Optionally, the electronic device 200 may further include a touch sensor 240. The touch sensor 240 may be disposed in the display 230. The touch sensor 240 and the display 230 constitute a touchscreen, also referred to as a "touchscreen".

The structure shown in this embodiment of this application does not constitute a specific limitation on the electronic device 200. In some other embodiments of this application, the electronic device 200 may include more or fewer components than those shown in the figure, or some components may be combined, or some components may be split, or the components may be arranged differently. The components shown in the figure may be implemented by using hardware, software, or a combination of software and hardware. For example, when the electronic device 200 is specifically a mobile phone, the electronic device 200 further includes a universal serial bus (universal serial bus, USB) interface, a charging management module, a power management module, a camera, a battery, an antenna, a mobile communication module, a wireless communication module, a speaker, a receiver, a headset jack, a sensor, a button, a motor, an indicator, and a subscriber identity module (subscriber identity module, SIM) card interface.

The processor 210 may include one or more processing units. For example, the processor 210 may include an application processor (application processor, AP), a graphics processing unit (graphics processing unit, GPU), an image signal processor (image signal processor, ISP), and a controller. Different processing units may be independent components, or may be integrated into one or more processors. The controller may generate an operation control signal based on an instruction operation code and a timing signal, to control instruction fetching and instruction execution.

The processor 210 may include one or more interfaces. The interface may include an inter-integrated circuit (inter-integrated circuit, I2C) interface, a mobile industry processor interface (mobile industry processor interface, MIPI), a general-purpose input/output (general-purpose input/output, GPIO) interface, and the like.

The I2C interface is a two-way synchronous serial bus, and includes a serial data line (serial data line, SDA) and a serial clock line (serial clock line, SCL). In some embodiments, the processor 210 may include a plurality of groups of I2C buses. The processor 210 may be coupled to the touch sensor 240 and the like through different I2C bus interfaces. For example, the processor 210 may be coupled to the touch sensor 240 through the I2C interface, so that the processor 210 communicates with the touch sensor 240 through the I2C bus interface, to implement a touch function of the electronic device 200.

The MIPI interface may be configured to connect the processor 210 to a peripheral component, for example, the display 230. The MIPI interface includes a display serial interface (display serial interface, DSI) and the like. In some embodiments, the processor 210 communicates with the display 230 through the DSI interface, to implement a display function of the electronic device 200.

The GPIO interface may be configured by software. The GPIO interface may be configured as a control signal or a data signal. In some embodiments, the GPIO interface may be configured to connect the processor 210 to the display 230 and the like.

An interface connection relationship between the modules shown in this embodiment of this application is merely an example for description, and does not constitute a limitation on the structure of the electronic device 200. In some other embodiments of this application, the electronic device 200 may alternatively use an interface connection mode different from that in the foregoing embodiment, or use a combination of a plurality of interface connection modes.

The electronic device 200 implements a display function through the GPU, the display 230, the application processor, and the like. The GPU is a microprocessor for image processing, and is connected to the display 230 and the application processor. The GPU is configured to perform mathematical and geometric computation for graphics rendering. The processor 210 may include one or more GPUs that execute program instructions to generate or change displayed information.

The display 230 is configured to display an image, a video, or the like. The display 230 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 200 may include one or N displays 230, where N is a positive integer greater than 1.

The memory 220 may be configured to store computer-executable program code. The executable program code includes instructions. The memory 220 may include a program storage area and a data storage area. The program storage area may store an operating system, an application for at least one function (for example, an image play function), and the like. The data storage area may store data created during use of the electronic device 200. In addition, the memory 220 may include a high-speed random access memory, or may include a non-volatile memory, for example, at least one magnetic disk storage device, a flash memory, or a universal flash storage (universal flash storage, UFS). The processor 210 runs instructions stored in the memory 220 and/or instructions stored in the memory disposed in the processor, to perform various function applications and data processing of the electronic device 200.

The touch sensor 240 is also referred to as a "touch device". The touch sensor is configured to detect a touch operation performed on or near the touch sensor. The touch sensor may transmit the detected touch operation to the application processor to determine a type of a touch event. The display 230 may provide a visual output related to the touch operation. For example, when uploading a picture, a user may perform a tap operation on a touchscreen of a mobile phone to select a picture, and perform a swipe-to-turn-page operation to turn a page of a picture.

The electronic device 200 is used below as an example to describe the picture display solution provided in embodiments of this application.

The following separately describes two cases: a process of keyword-based picture recommendation and picture display, and a process of event-based picture recommendation and picture display.

### Keyword-based picture recommendation and picture display:

After displaying an interface of an application on the display 230, if receiving a target operation input by a user on the interface of the application, the electronic device 200 obtains, in response to the target operation, target information related to interface content of the application. The target information may include one or more keywords. The target operation is an operation for uploading a picture.

In some embodiments, the target information may include a single keyword, and the keyword includes a plurality of subcategories.

In this case, after obtaining the keyword, the electronic device 200 first selects a picture set of the keyword from a picture set, and then classifies a search result of the picture set of the keyword to obtain a classification result, to be specific, classifies pictures in the picture set to determine a category to which each picture belongs.

If the classification result indicates that the picture set of the keyword includes pictures of a plurality of categories, the keyword includes a plurality of subcategories. If the classification result indicates that the picture set of the keyword includes only pictures of one category, the keyword does not include a plurality of subcategories.

For example, the keyword is "pet". A mobile phone 100 performs picture searching from pictures in Gallery 102 to obtain a picture set of "pet", and classifies a search result of the picture set of "pet" to obtain a classification result. If the classification result indicates that a candidate picture set of "pet" includes a picture of a "dog" and a picture of a "cat", "pet" includes two subcategories: "cat" and "dog". If the classification result indicates that a candidate picture set of "pet" includes only a picture of a "dog", "pet" has only one category: "dog".

In a process of selecting the picture set of the keyword from the picture set, the electronic device 200 may calculate a matching degree between each picture in the picture set and the keyword; determine whether the matching degree of each picture is greater than or equal to a preset matching degree threshold; and if the picture is greater than or equal to the matching degree threshold, select the picture as a picture of the keyword; or if the picture is less than the matching degree threshold, skip selecting the picture as a picture of the keyword. A plurality of pictures of the keyword may form the picture set of the keyword.

After the electronic device 200 obtains the classification result of the picture set of the keyword, if the picture set of the keyword includes pictures of a plurality of subcategories, the electronic device 200 selects, from the pictures of the subcategories, a picture of each subcategory that is to be displayed on a first-screen interface.

To enable the first-screen interface to display pictures of a plurality of subcategories, a total quantity of pictures of the subcategories that are to be displayed on the first-screen interface may be made to be less than or equal to a first picture quantity. The first picture quantity is a quantity of pictures that a first-screen interface of a picture selection interface is able to display.

The first picture quantity may be preset. For example, a quantity of pictures that a first-screen interface of the mobile phone 100 is able to display is set to 16. In other words, a maximum of 16 pictures can be displayed on the first-screen interface of the mobile phone 100.

Quantities of pictures of different subcategories that are displayed on the first-screen interface may be the same or different. In addition, a quantity of pictures of all subcategories that are displayed on the first-screen interface is less than or equal to the first picture quantity. For example, the keyword "pet" includes two subcategories: "cat" and "dog", in other words, a quantity of subcategories is 2; and the first picture quantity is 16. In this case, quantities of pictures of "cat" and "dog" that are displayed on the first-screen interface are both 8; or a quantity of pictures of "cat" that are displayed on the first-screen interface is 6, and a quantity of pictures of "dog" that are displayed on the first-screen interface is 6 or 10.

When determining, based on the first picture quantity and the quantity of subcategories, a quantity of pictures of each subcategory that are to be displayed on the first-screen interface, the electronic device 200 may determine, according to a principle of equal distribution, the quantity of pictures of the subcategory that are to be displayed on the first-screen interface. For example, the first picture quantity is 16, the quantity of subcategories is 2, and eight pictures are evenly distributed to each subcategory according to the principle of equal distribution. In other words, a quantity of pictures of each subcategory that can be displayed on the first-screen interface is 8.

Certainly, the electronic device 200 may alternatively determine, in another manner, a quantity of pictures of each subcategory that are to be displayed on the first-screen interface. This is not limited herein.

For example, the electronic device 200 may alternatively determine, based on a quantity of pictures of each subcategory, a quantity of pictures of the subcategory that are to be displayed on the first-screen interface. A quantity of pictures of a subcategory is positively correlated with a quantity of pictures of the subcategory that are displayed on the first-screen interface. For example, the first picture quantity is 16, and the keyword "pet" includes two subcategories: "cat" and "dog". There are a total of 100 pictures of "pet", including a total of 60 pictures of "cat" and a total of 40 pictures of "dog". In this case, a proportion of the pictures of "cat" is 0.6, and a proportion of the pictures of "dog" is 0.4. Based on the proportions of the pictures, it is determined that, a quantity of pictures of "cat" that are to be displayed on the first-screen interface is 16×0.6=9.6, and a quantity of pictures of "dog" that are to be displayed on the first-screen interface is 16×0.4=6.4. Finally, the quantities of pictures are rounded off. It can be determined that, a quantity of pictures of "cat" that are to be displayed on the first-screen interface is 10, and a quantity of pictures of "dog" that are to be displayed on the first-screen interface is 6.

For each subcategory, the electronic device 200 may select a corresponding quantity of pictures from pictures of the subcategory based on a quantity of pictures of the subcategory that are to be displayed on the first-screen interface, and use the selected pictures as pictures of the subcategory that are to be displayed on the first-screen interface. For example, there are 20 pictures of "cat", a quantity of pictures of "cat" that are displayed on the first-screen interface is 6. After the 20 pictures are sorted by matching degree, the top six pictures with highest matching degrees are selected from the 20 pictures as pictures of the subcategory "cat" that are to be displayed on the first-screen interface.

Certainly, in addition to selecting, based on matching degrees of pictures, pictures of each subcategory that are to be displayed on the first-screen interface, the electronic device 200 may alternatively select, in another manner, a corresponding quantity of pictures from pictures of a subcategory based on a quantity of pictures of the subcategory that are to be displayed on the first-screen interface, and use the selected pictures as pictures of the subcategory that are to be displayed on the first-screen interface. For example, the electronic device 200 may randomly select a corresponding quantity of pictures from pictures of a subcategory based on a quantity of pictures of the subcategory that are to be displayed on the first-screen interface; or score pictures of a same subcategory (for example, score the pictures based on definition or compositions), and select a corresponding quantity of pictures from pictures of the subcategory based on scores of the pictures.

In comparison, when a picture of a subcategory that is to be displayed on the first-screen interface is selected from pictures of the subcategory based on matching degrees of the pictures or scores of the pictures, a picture displayed on the first-screen interface can have higher quality, or is more likely to be a picture that the user needs to upload. This can further improve user experience in picture selection.

The electronic device 200 may alternatively select a corresponding quantity of pictures from pictures of each subcategory based on a quantity of pictures of the subcategory that are to be displayed on the first-screen interface and time of the pictures.

In an optional manner, for each subcategory, the electronic device 200 selects a corresponding quantity of pictures in descending or ascending order of picture time of pictures of the subcategory, and uses the selected pictures as pictures of the subcategory that are to be displayed on the first-screen interface. An earlier or later picture may mean that picture time is farther away from or closer to current time. A latest picture is a picture whose picture time is closest to the current time. An earliest picture is a picture whose picture time is farthest away from the current time.

It should be noted that the picture time may be capture time of the picture, creation time (or referred to as save time) of the picture, or modification time of the picture. Usually, if a picture has capture time, the capture time of the picture is preferentially used as picture time. If a picture has no capture time, save time or modification time of the picture may be used as picture time.

In another optional manner, for each subcategory, the electronic device 200 first obtains a plurality of time periods through division based on picture time of pictures of the subcategory, where each time period includes one or more pictures; and then selects a corresponding quantity of pictures from the pictures in each time period, and uses the selected pictures as pictures of the subcategory that are to be displayed on the first-screen interface.

During specific application, pictures selected from different time periods may be the same or different. For example, there are a total of 30 pictures of the subcategory "dog", and picture time of the 30 pictures is divided into two time periods: a first time period and a second time period. The first time period is closest to current time, and the second time period is farthest away from the current time. There are 20 pictures whose picture time falls within the first time period, and there are 10 pictures whose picture time falls within the second time period. A quantity of pictures of the subcategory "dog" that are to be displayed on the first-screen interface is 8. In this case, four pictures may be selected from the 20 pictures in the first time period, four pictures may be selected from the 10 pictures in the second time period, and the selected pictures are used as pictures of "dog" that are to be displayed on the first-screen interface.

Certainly, in addition to evenly selecting pictures from time periods (to be specific, quantities of pictures selected from the time periods are the same), pictures may be selected from pictures in the time periods according to a principle of extracting a larger quantity of pictures from a time period closer to the current time. For example, there are 20 pictures in the first time period, and there are 10 pictures in the second time period. Compared with the second time period, the first time period is closer to the current time. Therefore, a quantity of pictures selected from the pictures in the first time period is greater than a quantity of pictures selected from the pictures in the second time period. For example, six pictures are selected from the 20 pictures in the first time period, two pictures are selected from the 10 pictures in the second time period, and the selected pictures are used as pictures of "dog" that are to be displayed on the first-screen interface.

During selection of a picture of a subcategory that is to be displayed on the first-screen interface, if a quantity of pictures of the subcategory is less than a quantity of pictures of the subcategory that are to be displayed on the first-screen interface, all pictures of the subcategory are used as pictures to be displayed on the first-screen interface; or if a quantity of pictures of the subcategory is greater than a quantity of pictures of the subcategory that are to be displayed on the first-screen interface, a corresponding quantity of pictures may be selected based on matching degrees of the pictures or in another manner, and the selected pictures is used as pictures of the subcategory that are to be displayed on the first-screen interface. For example, the keyword "pet" includes two subcategories: "cat" and "dog". If a quantity of pictures of "cat" that are to be displayed on the first-screen interface is 8 but there are only six pictures of "cat", all the pictures of "cat" are displayed on the first-screen interface. If a quantity of pictures of "dog" that are to be displayed on the first-screen interface is 8 and there are only 15 pictures of "dog", eight pictures need to be selected from the 15 dog pictures as pictures of the subcategory "dog" that are to be displayed on the first-screen interface.

After obtaining a picture of each subcategory that is to be displayed on the first-screen interface, the electronic device 200 may display the selected picture of each subcategory on the first-screen interface.

Optionally, the electronic device 200 may further display a tab page (Tab page) of each subcategory on the picture selection interface. The tab page of each subcategory includes a picture of the subcategory.

For example, FIG. 3A-1 and FIG. 3A-2 are a diagram of picture display based on a plurality of subcategories of a single keyword according to an embodiment of this application. Based on the scenario in FIG. 1A-1 to FIG. 1A-5, after the mobile phone 100 displays the details interface 111, the user taps the "Use now" button 112. The mobile phone 100 obtains target information of RedNote 104 in response to the tap operation for the "Use now" button 112. The target information may be related to interface content of the details interface 111.

In this case, the interface content of the details interface 111 includes text content "Pet photos in oil painting style" and a pet picture in an oil painting style. Therefore, the target information may be a keyword "pet". Usually, one or more keywords may be preset for each graphics and text template in RedNote 104. In this case, a keyword that is set for a graphics and text template corresponding to the details interface 111 is "pet". Certainly, the mobile phone 100 may alternatively recognize the interface content of the details interface 111 to obtain a corresponding keyword.

After obtaining the keyword "pet", the mobile phone 100 selects, from pictures in Gallery 102, pictures matching the keyword "pet", to obtain a picture set of "pet". Specifically, the picture set of the pet may be obtained based on a matching degree between each picture and the keyword "pet", and then search result classification is performed on the picture set of "pet" to obtain a classification result. In this case, the classification result indicates that the picture set of "pet" includes a picture of "cat" and a picture of "dog". In other words, the keyword "pet" includes two subcategories: "cat" and "dog".

The mobile phone 100 selects eight pictures from pictures of "cat" and eight pictures from pictures of "dog" based on a quantity of pictures that a first-screen interface is able to display, and uses the eight pictures as pictures of the subcategory that are to be displayed on the first-screen interface.

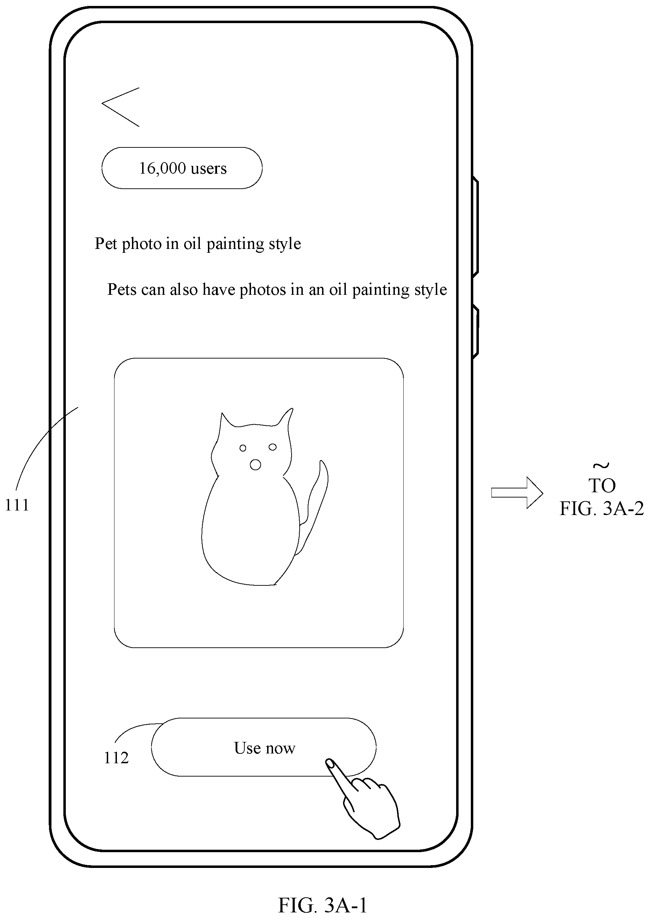

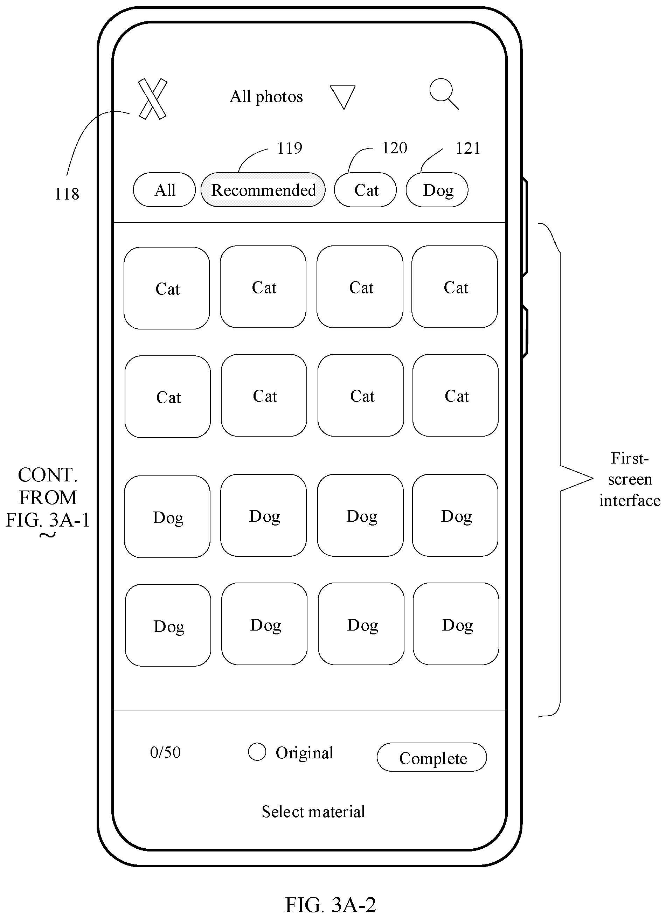

After determining the eight pictures of "cat" and the eight pictures of "dog" that are to be displayed on the first-screen interface, the mobile phone 100 displays a picture selection interface 118 based on the eight pictures of the subcategory "cat" that are to be displayed on the first-screen interface and the eight pictures of the subcategory "dog" that are to be displayed on the first-screen interface. The picture selection interface 118 includes a recommendation page button 119. In FIG. 3A-2, the picture selection interface 118 is on a recommendation page.

Eight cat pictures and eight dog pictures are displayed on a first-screen interface of the picture selection interface 118. In addition, the eight cat pictures are first displayed, and then the eight dog pictures are displayed. Display positions of the cat pictures are in front of positions of the dog pictures.

After the mobile phone 100 displays the picture selection interface 118, pictures of all subcategories of the keyword "pet" are displayed on the first-screen interface of the picture selection interface 118. Therefore, when creating a note with a theme being a pet photo in an oil painting style, the user may easily and quickly select, from the pet pictures displayed on the first-screen interface, a pet picture that needs to be uploaded to RedNote 104, without turning pages to search for a cat picture or a dog picture. This improves convenience of selecting a picture by the user.

Optionally, the picture selection interface 118 may further include a cat tab page button 120 and a dog tab page button 121.

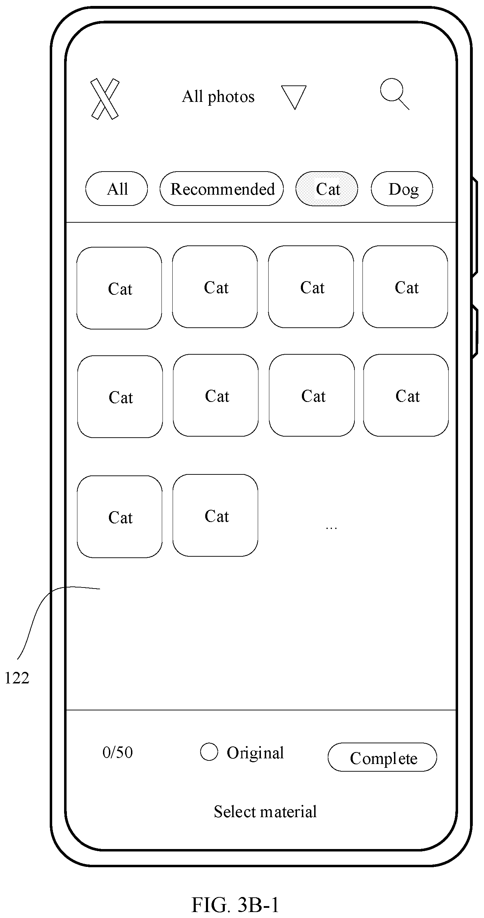

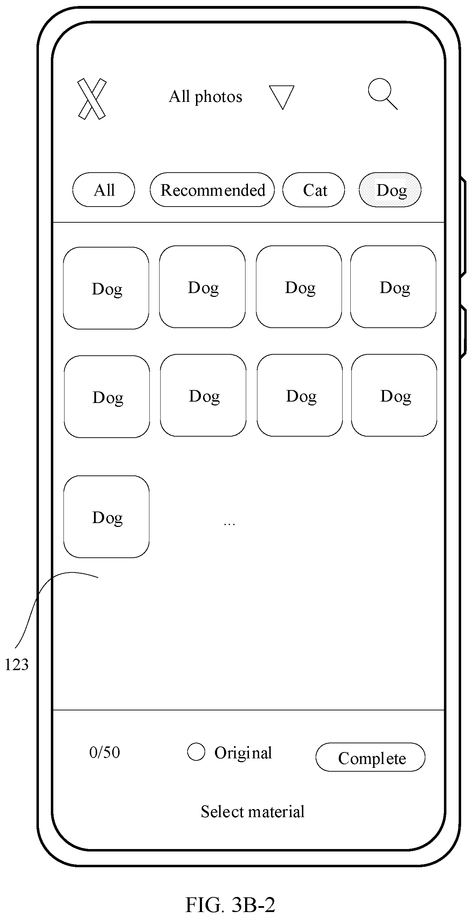

After the user taps the cat tab page button 120, the mobile phone 100 displays a cat tab page 122 in FIG. 3B-1 in response to the tap operation. The cat tab page 122 may include all cat pictures in Gallery 102 of the mobile phone 100. FIG. 3B-1 and FIG. 3B-2 are a diagram of tab pages of subcategories according to an embodiment of this application.

After the user taps the dog tab page button 121, the mobile phone 100 displays a dog tab page 123 in FIG. 3B-2 in response to the tap operation. The dog tab page 123 may include all dog pictures in Gallery 102 of the mobile phone 100.

It should be noted that, usually, an arrangement order of tab pages of subcategories may be the same as a display order of the subcategories on the first-screen interface. For example, on the first-screen interface in FIG. 3A-2, the cat pictures are displayed in front of the dog pictures, and correspondingly, the cat tab page button 120 is displayed in front of the dog tab page button 121. Certainly, an arrangement order of tab pages of subcategories may be different from a display order of the subcategories on the first-screen interface. In addition, a display order of pictures on a tab page of each subcategory may be random. For example, the pictures may be sorted and displayed based on an order of picture time, scores of the pictures, or matching degrees.

The mobile phone 100 displays tabs of a plurality of subcategories of the pet, to further improve convenience of selecting a picture. For example, when the eight cat pictures displayed on the first-screen interface do not include a picture that the user wants to upload, the user may directly locate, from the cat tab page 122, a cat picture that needs to be uploaded, without being distracted by a picture of another category (for example, the dog). It takes a shorter time to locate the cat picture that needs to be uploaded, achieving higher efficiency.

It should be noted that, when pictures of different subcategories are displayed on the first-screen interface, the electronic device 200 may first determine priorities of the different subcategories, and then display the pictures of the subcategories on the first-screen interface based on the priorities of the subcategories. A display position of a picture of a subcategory with a higher priority is in front of a display position of a picture of a subcategory with a lower priority.

Priorities of different subcategories may be determined based on quantities of pictures of the subcategories. If a quantity of pictures of a subcategory is greater than a quantity of pictures of another subcategory, a priority of the subcategory is higher than a priority of the another subcategory. Certainly, priorities of subcategories may alternatively be determined in another manner. This is not limited herein.

For example, in FIG. 3A-2, a candidate picture set of "pet" includes 100 cat pictures and 50 dog pictures. Because a quantity of cat pictures is greater than a quantity of dog pictures, a priority of a cat is higher than a priority of a dog. When displaying the cat pictures and the dog pictures on the first-screen interface, the mobile phone 100 first displays the cat pictures, and then displays the dog pictures.

In some other embodiments, the electronic device 200 may alternatively determine a display order of different subcategories on the first-screen interface in a random manner.

When displaying pictures of a same subcategory on the first-screen interface, the electronic device 200 may determine, based on picture time, picture scores, or the like, a display order of the pictures of the same subcategory on the first-screen interface. Picture time closer to current time or a higher score of a picture indicates that a display position of the picture is closer to the front. A score of a picture may be obtained by performing quality scoring on the picture. For example, the picture is scored based on picture definition.

For example, in FIG. 3A-2, the eight cat pictures are sequentially displayed on the first-screen interface based on an order of picture time.

Usually, an upper left corner on the first-screen interface is a frontmost display position, and a lower right corner is a rearmost display position. For example, FIG. 3C is a diagram of an order of display positions on a first-screen interface according to an embodiment of this application. The eight cat pictures and the eight dog pictures displayed on the first-screen interface in FIG. 3A-2 are used as an example. An upper left corner of the first-screen interface is used as an origin to establish an XY coordinate system. A display position of a picture in the upper left corner of the first-screen interface is a frontmost position. A display position of a picture in the lower right corner is a rearmost position. To be specific, a picture 124 is displayed in a frontmost position, and a picture 127 is displayed in a rearmost position. An order of display positions may be determined based on X and Y coordinates. For example, the display position of the picture 124 is in front of the display position of the picture 125, and both the display position of the picture 124 and the display position of the picture 124 are in front of a display position of a picture 126.

It should be further noted that, on the first-screen interface in FIG. 3A-2, a plurality of pictures of a same subcategory are displayed next to each other. In other words, a plurality of pictures of a same subcategory are displayed in one region or displayed in an aggregate manner. However, in some other embodiments, a plurality of pictures of a same subcategory may not be displayed in an aggregate manner. For example, FIG. 3D is a diagram of non-aggregate display according to an embodiment of this application. Based on the scenario shown in FIG. 3A-1 and FIG. 3A-2, on a first-screen interface in FIG. 3D, the eight cat pictures are not displayed in an aggregate manner, and the eight dog pictures are not displayed in an aggregate manner. In this case, a display order of the eight cat pictures and the eight dog pictures on the first-screen interface may be random, or may be determined based on picture time, picture scores, or the like. This is not limited herein.

Compared with non-aggregate display, aggregate display of pictures of a same subcategory can further improve convenience of selecting a picture by the user.

It should be understood that a picture that is not displayed on the first-screen interface is displayed on a non-first-screen interface. A picture display format of the non-first-screen interface may be the same as or different from a picture display format of the first-screen interface. The picture display format of the non-first-screen interface is not limited herein.

For example, FIG. 4A to FIG. 4C are a diagram of picture display based on a plurality of subcategories of a single keyword according to an embodiment of this application. Based on the scenario in FIG. 1A-1 to FIG. 1A-5, after the mobile phone 100 displays the graphics and text template interface 107, the user taps the graphics and text template 108. The mobile phone 100 displays a dog outfit template interface 128 of the graphics and text template 108 in response to the tap operation for the graphics and text template 108. After the user taps a "Use now" button on the dog outfit template interface 128, the mobile phone 100 displays a picture selection interface 129 in response to the tap operation.

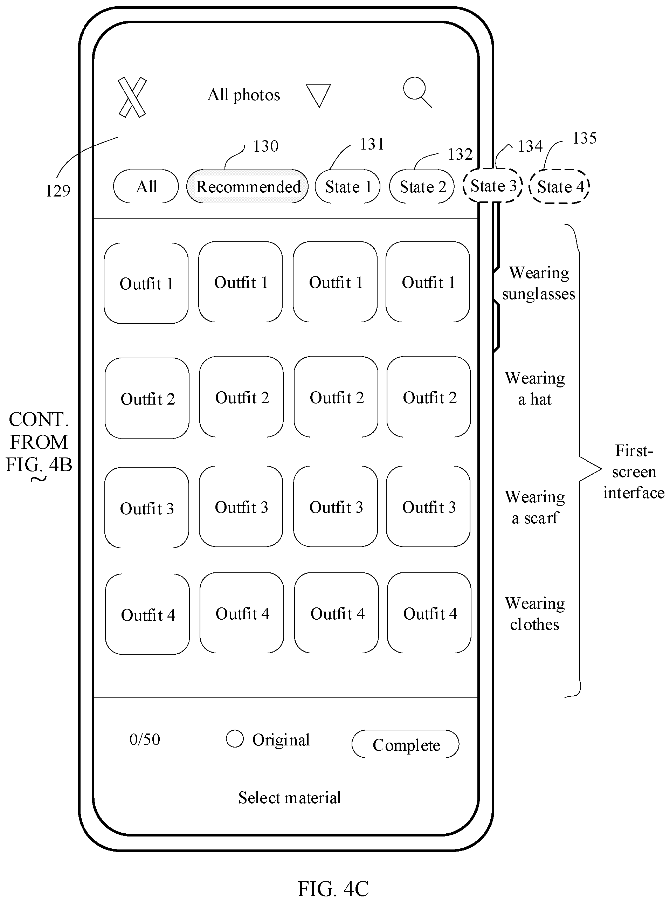

The picture selection interface 129 includes a recommendation page button 130. Pictures of dogs in plurality of states are displayed on a first-screen interface, and pictures of each state are displayed in an aggregate manner. In FIG. 4C, the picture selection interface 129 is on a recommendation page.

In this case, "dog" is a keyword. The keyword "dog" includes a plurality of subcategories (for example, a state or an outfit). A picture of an outfit 1 (namely, a state 1) is a picture of a dog wearing sunglasses. A picture of an outfit 2 (namely, a state 2) is a picture of a dog wearing a hat. A picture of an outfit 3 (namely, a state 3) is a picture of a dog wearing a scarf. A picture of an outfit 4 (namely, a state) is a picture of a dog wearing clothes.

Various pictures of outfits on the first-screen interface of the picture selection interface 129 are displayed in an aggregate manner. To be specific, four pictures of the outfit 1 are displayed in a same row, four pictures of the outfit 2 are displayed in a same row, four pictures of the outfit 3 are displayed in a same row, and four pictures of the outfit 4 are displayed in a same row. The pictures of the outfit 1 are displayed in frontmost positions on the first-screen interface. The pictures of the outfit 4 are displayed in rearmost positions on the first-screen interface.

A specific process of displaying, by the mobile phone 100, the picture selection interface 129 in response to the operation of tapping, by the user, the "Use now" button on the dog outfit template interface 128 may be as follows.

The mobile phone 100 obtains target information of RedNote 104 in response to the tap operation for the "Use now" button on the dog outfit template interface 128. The target information may be related to interface content of the dog outfit template interface 128.

In this case, the interface content of the dog outfit template interface 128 includes text content "Dog outfit diary" and a picture of a dog wearing a decoration, and the target information may include a keyword "dog". Usually, one or more keywords are preset for each graphics and text template in RedNote 104. It is assumed that a keyword preset for the graphics and text template 108 includes "dog" and "outfit", or includes "dog". Certainly, the mobile phone 100 may alternatively recognize the interface content of the dog outfit template interface 128 to obtain the keyword "dog".

After obtaining the keyword "dog", the mobile phone 100 selects, from pictures in Gallery 102, pictures matching the keyword "dog", to obtain a picture set of "dog". Specifically, the picture set of "dog" may be obtained based on a matching degree between each picture and the keyword "dog", and then search result classification is performed on the picture set of "dog" to obtain a classification result. In this case, the classification result indicates that the picture set of "dog" includes a picture of a dog wearing sunglasses, a picture of a dog wearing a hat, a picture of a dog wearing a scarf, and a picture of a dog wearing clothes. That is, the keyword "dog" includes four subcategories. In this case, the subcategories may be states or outfits.

The mobile phone 100 may determine, based on a quantity of pictures that the first-screen interface is able to display and a quantity of subcategories, a quantity of pictures of each subcategory that can be displayed on the first-screen interface. Assuming that a quantity of pictures of each subcategory that are displayed on the first-screen interface is 4, the mobile phone 100 may select four pictures from pictures of a dog wearing sunglasses, four pictures from pictures of a dog wearing a hat, four pictures from pictures of a dog wearing a scarf, and four pictures from pictures of a dog wearing clothes based on matching degrees of the pictures or picture scores (for example, the pictures are scored based on definition or colors of the pictures). Four pictures selected from various outfit pictures are used as pictures of the subcategory (to be specific, an outfit or a state) that are to be displayed on the first-screen interface.

The mobile phone 100 separately displays, on the first-screen interface of the picture selection interface 129, the four pictures selected from the pictures of a dog wearing sunglasses, the four pictures selected from the pictures of a dog wearing a hat, the four pictures selected from the pictures of a dog wearing a scarf, and the four pictures selected from the pictures of a dog wearing clothes.

After the mobile phone 100 displays the picture selection interface 129, pictures of all states (or outfits) of the keyword "dog" are displayed on the first-screen interface of the picture selection interface 129. Therefore, when creating a note with a theme being a dog outfit diary, the user may easily and quickly select, from various outfit pictures of dogs displayed on the first-screen interface, a picture that needs to be uploaded to RedNote 104, without turning pages to search for various outfit pictures of dogs. This improves convenience of selecting a picture by the user.

Optionally, the picture selection interface 129 may further include a state 1 tab page button 131, a state 2 tab page button 132, a state 3 tab page button 133, and a state 4 tab page button 134. The state 3 tab page button 133 and the state 4 tab page button 134 are displayed on an interface other than the picture selection interface 129. The user may find the state 3 tab page button 133 and the state 4 tab page button 134 through a swipe operation.

The user may tap a state tab page button to trigger the mobile phone 100 to display a tab page of a corresponding state. For example, after the user taps the state 1 tab page button 131, the mobile phone 100 displays a tab page of the state 1 in response to the tap operation. All pictures of a dog wearing sunglasses are displayed on the tab page of the state 1. In this way, the mobile phone 100 displays tab pages of various outfits of dogs, so that the user can easily and quickly obtain a picture of a corresponding outfit from the tab pages. This reduces interference caused by other pictures (for example, pictures not belonging to the same outfit).

In some other embodiments, the target information may include at least two keywords. In this case, after obtaining the keywords, the electronic device 200 first selects a picture set of each keyword from a picture set, and then selects, from the picture set of each keyword, a picture of each keyword that is to be displayed on a first-screen interface.

For each keyword, a process of selecting a picture set of the keyword from the picture set may be as follows: The electronic device 200 calculates a matching degree between each picture in the picture set and the keyword; determines whether the matching degree of each picture is greater than or equal to a preset matching degree threshold; and if the picture is greater than or equal to the matching degree threshold, selects the picture as a picture of the keyword; or if the picture is less than the matching degree threshold, skips selecting the picture as a picture of the keyword. A plurality of pictures of the keyword may form the picture set of the keyword.

To enable the first-screen interface to display pictures of a plurality of keywords, a total quantity of pictures of the keywords that are to be displayed on the first-screen interface may be made to be less than or equal to a first picture quantity. The first picture quantity is a quantity of pictures that a first-screen interface of a picture selection interface is able to display. Quantities of pictures of different keywords that are displayed on the first-screen interface may be the same or different.

When determining, based on the first picture quantity, a quantity of pictures of each keyword that are to be displayed on the first-screen interface, the electronic device 200 may determine, according to a principle of equal distribution, the quantity of pictures of the keyword that are to be displayed on the first-screen interface. For example, the first picture quantity is 16, a quantity of keywords is 4, and four pictures are evenly distributed to each keyword according to the principle of equal distribution. In other words, a quantity of pictures of each keyword that can be displayed on the first-screen interface is 4.

Certainly, the electronic device 200 may alternatively determine, in another manner, a quantity of pictures of each keyword that are to be displayed on the first-screen interface. This is not limited herein. For example, the quantity of pictures of each keyword that are to be displayed on the first-screen interface may be determined based on a proportion of pictures of the keyword. The proportion of pictures is a ratio of a quantity of pictures of the keyword to a total quantity of pictures of all keywords.

For each keyword, the electronic device 200 may select a corresponding quantity of pictures from a picture set of the keyword based on a quantity of pictures of the keyword that are to be displayed on the first-screen interface, and use the selected pictures as pictures of the keyword that are to be displayed on the first-screen interface. For example, the keyword is "panda", a picture set of "panda" includes 50 pictures, and a quantity of pictures of "panda" that are to be displayed on the first-screen interface is 4. After the 50 pictures are sorted by matching degree, the top four pictures with highest matching degrees are selected from the 50 pictures as pictures of the keyword "panda" that are to be displayed on the first-screen interface. Certainly, the electronic device 200 may alternatively select, in another manner, a corresponding quantity of pictures from a picture set of each keyword based on a quantity of pictures of the subcategory that are to be displayed on the first-screen interface, and use the selected pictures as pictures of the keyword that are to be displayed on the first-screen interface. For example, a corresponding quantity of pictures may be randomly selected from pictures of the keyword; or pictures in the picture set of the keyword are scored (for example, scored based on definition or compositions), and a corresponding quantity of pictures are selected from the picture set of the keyword based on scores of the pictures.

In comparison, when a picture of a keyword that is to be displayed on the first-screen interface is selected from a picture set of the keyword based on matching degrees of pictures or picture scores, a picture displayed on the first-screen interface can have higher quality, or is more likely to be a picture that the user needs to upload. This can further improve user experience in picture selection.

The electronic device 200 may alternatively select a corresponding quantity of pictures from pictures of each keyword based on a quantity of pictures of the keyword that are to be displayed on the first-screen interface and time of the pictures. Specifically, the electronic device 200 selects a corresponding quantity of pictures in descending or ascending order of picture time of pictures of the keyword, and uses the selected pictures as pictures of the keyword that are to be displayed on the first-screen interface. For details, refer to the foregoing related content of selecting a picture of each subcategory that is to be displayed on the first-screen interface. Details are not described herein again.

During selection of a picture of each keyword that is to be displayed on the first-screen interface, if a quantity of pictures of the keyword is less than a quantity of pictures of the keyword that are to be displayed on the first-screen interface, all pictures of the keyword are used as pictures to be displayed on the first-screen interface; or if a quantity of pictures of the keyword is greater than a quantity of pictures of the keyword that are to be displayed on the first-screen interface, a corresponding quantity of pictures may be selected based on matching degrees of the pictures or in another manner, and the selected pictures is used as pictures of the keyword that are to be displayed on the first-screen interface. For example, the keywords include "cat" and "dog". If a quantity of pictures of "cat" that are to be displayed on the first-screen interface is 8 but there are only six pictures of "cat", all the pictures of "cat" are displayed on the first-screen interface. If a quantity of pictures of "dog" that are to be displayed on the first-screen interface is 8 and there are only 15 pictures of "dog", eight pictures need to be selected from the 15 dog pictures as pictures of the keyword "dog" that are to be displayed on the first-screen interface.

After obtaining a picture of each keyword that is to be displayed on the first-screen interface, the electronic device 200 may display pictures of a plurality of keywords on the first-screen interface.

When displaying the pictures of the plurality of keywords on the first-screen interface, the electronic device 200 may first determine priorities of the plurality of keywords. A priority of a keyword is related to a display order of a picture of the keyword on the first-screen interface. A display position of a picture of a keyword with a higher priority on the first-screen interface is closer to the front.

Optionally, the electronic device 200 may determine the priorities of the plurality of keywords based on an order of obtaining the plurality of keywords. For example, RedNote 104 invokes a picture selector to transmit a plurality of keywords to Gallery 102, and a transmission order of the plurality of keywords is as follows: cat and panda. In this case, a priority of the cat is higher than a priority of the panda.

Certainly, the electronic device 200 may alternatively determine the priorities of the plurality of keywords in another manner. For example, the priorities of the plurality of keywords are determined based on quantities of pictures in picture sets of the keywords. In this case, a picture set of the cat includes 50 pictures, and a picture set of the panda includes 60 pictures. Therefore, a priority of the panda is higher than a priority of the cat. For another example, the priorities of the plurality of keywords are determined in a random manner.

Pictures of a same keyword may be displayed on the first-screen interface in an aggregate manner or a non-aggregate manner.

For example, FIG. 5A-1 to FIG. 5A-3 are a diagram of picture display based on a plurality of keywords according to an embodiment of this application. Based on the scenario in FIG. 1A-1 to FIG. 1A-5, after the mobile phone 100 displays the graphics and text template interface 107, the user taps the graphics and text template 109. The graphics and text template 109 is a graphics and text template with a theme being graduation season. A note with a theme being graduation season may be created by using the graphics and text template 109.

The mobile phone 100 displays a graduation season template interface 136 of the graphics and text template 109 in response to the tap operation for the graphics and text template 109. After the user taps a "Use now" button on the graduation season template interface 136, the mobile phone 100 obtains target information of RedNote 104 in response to the tap operation. The target information may be related to interface content of the graduation season template interface 136.

In this case, the interface content of the graduation season template interface 136 includes text content "Graduation season", a podium picture, a classroom picture, a playground picture, and the like. The podium picture is a picture captured at a podium, and the picture usually includes a related characteristic of the podium (for example, the picture includes a blackboard). The classroom picture is a picture captured in a classroom, and the picture usually includes a feature of the classroom (for example, the picture includes a desk). The playground picture is a picture captured on a playground, and the picture usually includes a feature of the playground (for example, the picture includes grass on a soccer field).

The target information may include four keywords: graduation photo, classroom, podium, and playground. An order of obtaining the four keywords is as follows: the graduation photo, the podium, the classroom, and the playground. To be specific, "graduation photo" is obtained first, and "playground" is obtained last.

After obtaining the four keywords, that is, the graduation photo, the classroom, the podium, and the playground, the mobile phone 100 selects a picture set of graduation photos, a picture set of classrooms, a picture set of podiums, and a picture set of playgrounds from pictures in Gallery 102 based on matching degrees between the pictures and the keywords.

The mobile phone 100 may select a corresponding quantity of pictures from a picture set of each keyword based on a quantity of pictures that a first-screen interface is able to display and matching degrees of pictures, and use the selected pictures as pictures of the keyword that are to be displayed on the first-screen interface. In this case, four pictures are selected from the picture set of graduation photos, four pictures are selected from the picture set of classrooms, four pictures are selected from the picture set of podiums, four pictures are selected from the picture set of playgrounds, and the selected pictures are used as pictures to be displayed on the first-screen interface.

Based on the order of obtaining the four keywords, that is, the graduation photo, the classroom, the podium, and the playground, the mobile phone 100 determines an order of priorities of the four keywords: the graduation photo > the podium > the classroom > the playground. Therefore, a display order of pictures of the four keywords on the first-screen interface is as follows: the graduation photo > the podium > the classroom > the playground. In addition, the mobile phone 100 further displays pictures of each keyword in an aggregate manner.

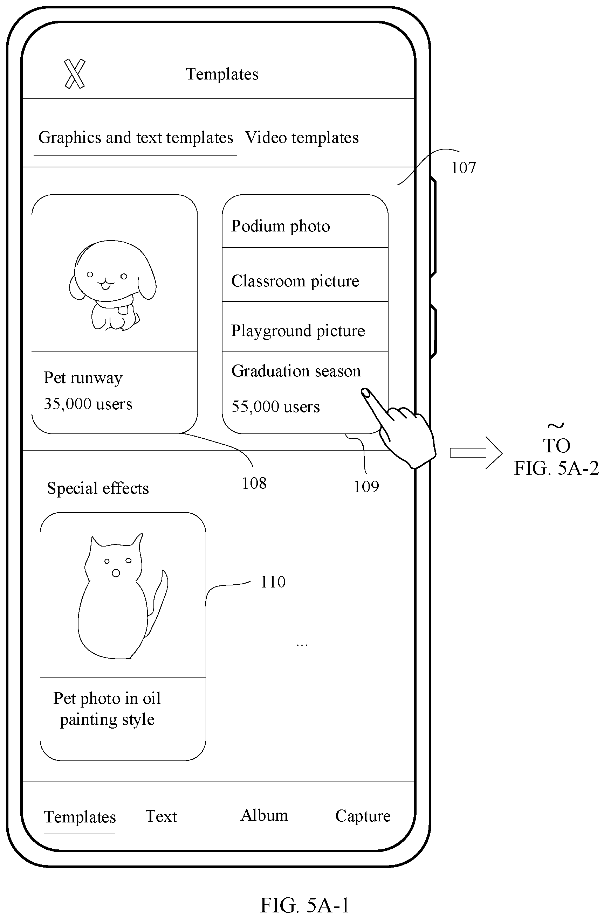

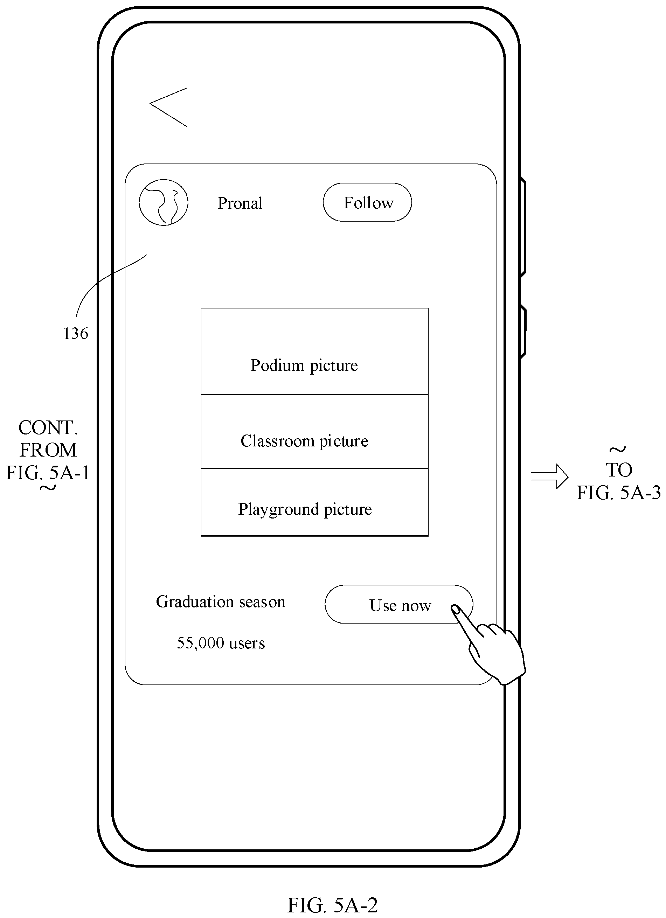

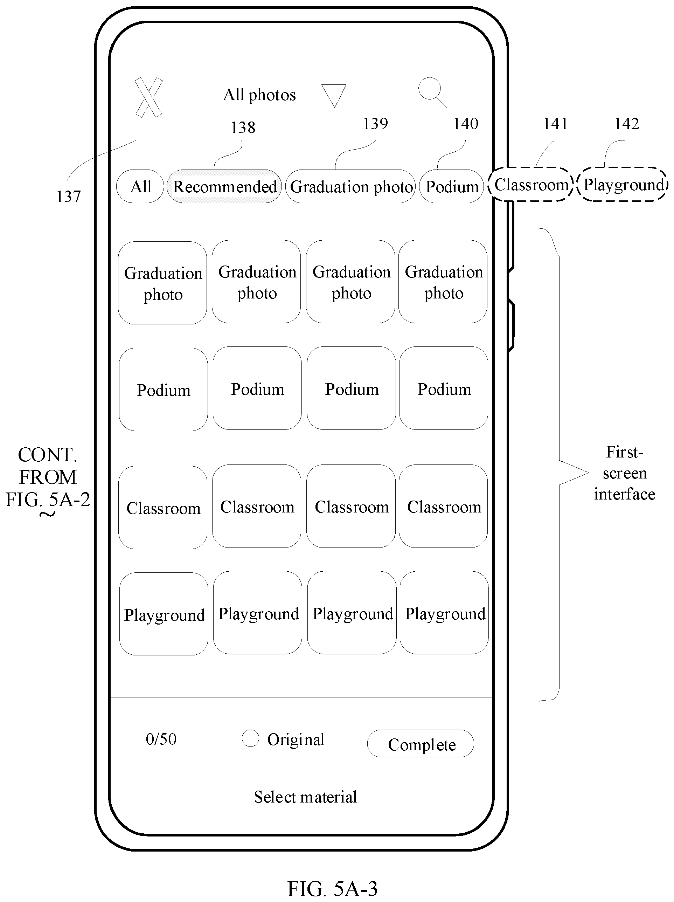

The mobile phone 100 displays a picture selection interface 137 based on the priorities of the four keywords: the graduation photo, the classroom, the podium, and the playground. On a first-screen interface of the picture selection interface 137, the four pictures of graduation photos are displayed in a first row, the four pictures of podiums are displayed in a second row, the four pictures of classrooms are displayed in a third row, and the four pictures of playgrounds are displayed in a fourth row. The picture selection interface 137 includes a recommendation page button 138. In this case, FIG. 5A-3 shows a recommendation interface.

After the mobile phone 100 displays the picture selection interface 137, when creating a note with a theme being graduation season, the user may easily and quickly select various pictures related to graduation season from pictures, displayed on the picture selection interface 137, of the four keywords: the graduation photo, the classroom, the podium, and the playground, without turning pages to search for various outfit pictures of graduation season. This improves convenience of selecting a picture by the user. In addition, pictures of each keyword on the first-screen interface are displayed in an aggregate manner. This also further facilitates picture selection by the user.

Optionally, the picture selection interface 137 may further include a graduation photo tab page button 139, a podium tab page button 140, a classroom tab page button 141, and a playground tab page button 142. The classroom tab page button 141 and the playground tab page button 142 are displayed on an interface other than the picture selection interface 137. The user may find the classroom tab page button 141 and the playground tab page button 142 through a swipe operation. An order of tab page buttons of keywords may be consistent with a display order of the keywords on the first-screen interface.

The user may tap a state tab page button to trigger the mobile phone 100 to display a tab page of a corresponding state. For example, after the user taps the classroom tab page button 141, the mobile phone 100 displays a classroom tab page in response to the tap operation. All pictures of classrooms are displayed on the classroom tab page.

Optionally, when the target information includes at least two keywords, search result classification may be further performed on a picture set of a keyword, to further determine whether the keyword includes subcategories; or search result classification may not be performed on a picture set of a keyword.

When performing search result classification on a picture set of a keyword, the electronic device 200 determines, based on the search result classification, subcategories included in the keyword; and displays pictures of a plurality of subcategories on the first-screen interface.

For example, in FIG. 5A-1 to FIG. 5A-3, after the picture set of graduation photos is obtained, pictures in the picture set of graduation photos may be further classified to determine categories of the pictures. In this case, it is determined, through search result classification, that the picture set of graduation photos includes 50 pictures of wearing sunglasses and 30 pictures of wearing a hat. To be specific, the keyword "graduation photo" includes two subcategories: wearing sunglasses and wearing a hat.

To enable pictures of a plurality of subcategories to be displayed on the first-screen interface, a corresponding quantity of pictures may be properly selected from pictures of each subcategory based on a quantity of pictures of the keyword that are to be displayed on the first-screen interface, and the selected pictures are used as pictures of the subcategory that are to be displayed on the first-screen interface. A total quantity of pictures of the plurality of subcategories that are to be displayed on the first-screen interface is less than or equal to the quantity of pictures of the keyword that are to be displayed on the first-screen interface. Quantities of pictures of the two subcategories, that is, wearing sunglasses and wearing a hat, that are to be displayed on the first-screen interface may be determined according to a principle of equal distribution, or may be determined based on a proportion of pictures of wearing sunglasses and a proportion of pictures of wearing a hat. The proportion of pictures is a ratio of a quantity of pictures of wearing sunglasses or a quantity of pictures of wearing a hat to a quantity of pictures of graduation photos.

It is assumed that a quantity of pictures of the keyword "graduation photo" that are to be displayed on the first page is 4. Two pictures are selected from the 50 pictures of wearing sunglasses as pictures of the subcategory "wearing sunglasses" that are to be displayed on the first-screen interface. Two pictures are selected from the 30 pictures of wearing a hat as pictures of the subcategory "wearing a hat" that are to be displayed on the first-screen interface.

Further, priorities of the two subcategories, that is, wearing sunglasses and wearing a hat, may be determined, to determine a display order of the two subcategories on the first-screen interface. Specifically, the priorities may be determined based on quantities of pictures of the subcategories. In this case, because the quantity of pictures of wearing sunglasses is greater than the quantity of pictures of wearing a hat, a priority of the subcategory "wearing sunglasses" is higher than a priority of the subcategory "wearing a hat". Therefore, on the first-screen interface of the picture selection interface 137, the first two pictures in a first row are pictures of wearing sunglasses, and the last two pictures in the first row are pictures of wearing a hat.

Further, tab pages of subcategories of a keyword may be displayed. For example, Graduation photo in FIG. 5A-3 includes two subcategories: wearing sunglasses and wearing a hat. In this case, drop-down options may be set for the graduation photo tab page button. Tabs are displayed in the drop-down options: Wear sunglasses and Wearing a hat. FIG. 5B-1 and FIG. 5B-2 are a diagram of tab pages of subcategories of a keyword according to an embodiment of this application. Based on the scenario in FIG. 5A-1 to FIG. 5A-3, the mobile phone 100 displays a drop-down option interface 143 on a graduation photo tab page in response to an operation of tapping the graduation photo tab page button 139 by the user. The drop-down option interface 143 on the graduation photo tab page includes two options: Wearing sunglasses and Wearing a hat. The user may tap the Wearing sunglasses option to trigger the mobile phone 100 to display a tab page including all pictures of graduation photos of wearing sunglasses; and tap the Wearing a hat option to trigger the mobile phone 100 to display a tab page including pictures of all graduation photos of wearing a hat.

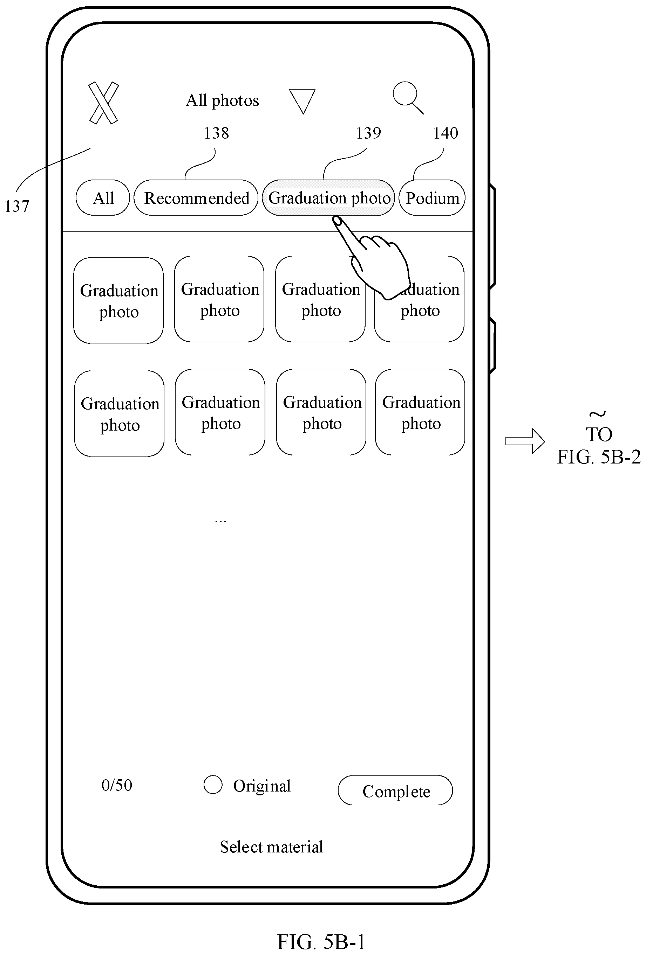

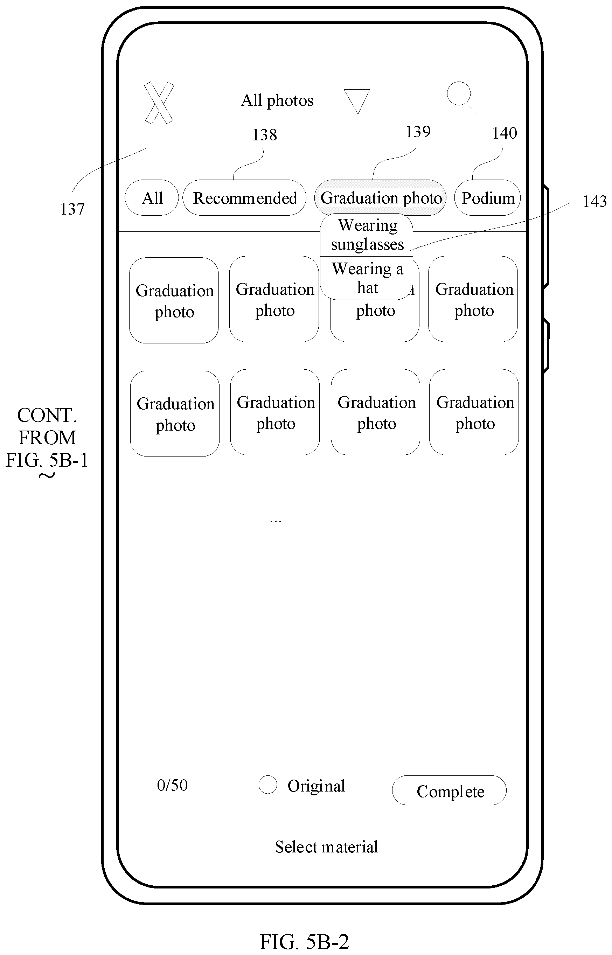

By analogy, the electronic device 200 may further perform search result classification on pictures of a subcategory to determine a quantity and categories of secondary subcategories included in the subcategory, and display pictures of a plurality of secondary subcategories on the first-screen interface. For example, in the scenarios in FIG. 3A-1, FIG. 3A-2, FIG. 3B-1, and FIG. 3B-2, a keyword is "pet", and subcategories of the keyword "pet" are "dog" and "cat". In this case, search result classification may be further performed on pictures of "cat" and "dog". The following assumption is made: It is determined, through search result classification on pictures of "dog", that the pictures of "dog" include 30 pictures of wearing clothes and 40 pictures of wearing a scarf. Further, based on a quantity of pictures of the subcategory "dog" that are to be displayed on the first-screen interface, a corresponding quantity of pictures are selected from the 30 pictures of wearing clothes and the 40 pictures of wearing a scarf, and the selected pictures are used as pictures to be displayed on the first-screen interface. It is assumed that the quantity of pictures of the subcategory "dog" that are to be displayed on the first-screen interface is 8. In this case, four pictures are selected from the 30 pictures of wearing clothes and displayed on the first-screen interface, and four pictures are selected from the 40 pictures of wearing a scarf and displayed on the first-screen interface. Similarly, tab pages may also be set for two secondary subcategories: "Wearing a scarf" and "Wearing clothes". A specific form may be shown in FIG. 5B-2. Details are not described herein again.

In some other embodiments, the target information may include only a single keyword, and no further search result classification is performed on a candidate picture set of the keyword, or the keyword does not include a subcategory. In this case, after obtaining a keyword, the electronic device 200 first selects a picture set of the keyword from a picture set based on a matching degree between each picture in the picture set and the keyword; and then selects a corresponding quantity of pictures from the picture set of the keyword based on a quantity of pictures that the first-screen interface is able to display and based on matching degrees of pictures and/or picture scores (for example, the pictures are scored based on definition or compositions of the pictures), and displays the selected pictures on the first-screen interface. In this way, the user can view, on the first-screen interface, a picture with high picture quality or a picture that is more likely to be a picture that the user needs to upload, to improve experience of selecting a picture by the user in a picture upload scenario. Certainly, a picture to be displayed on the first-screen interface may alternatively be selected from the picture set of the keyword in another manner (for example, based on an order of picture time).

### Event-based picture recommendation and picture display:

After displaying an interface of an application on the display 230, if receiving a target operation input by a user on the interface of the application, the electronic device 200 obtains, in response to the target operation, target information related to interface content of the application. The target information may include event information of one or more events. The target operation is an operation for uploading a picture.

During specific application, after obtaining the target information, the electronic device 200 may parse the target information to extract the event information. A quantity of events may be obtained based on a quantity of pieces of event information.

The event information may include, for example, time, a place, a person, and a specific situation of the event. The event information may be represented as (4W, when, where, who, what), where when indicates time at which the event occurs, where indicates a place at which the event occurs, who indicates a person, and what indicates a specific object (for example, an animal, a plant, or an activity) of the event. The activity includes, for example, running or cycling.

In some embodiments, if the target information includes event information of only one event, after extracting the event information from the target information, the electronic device 200 selects a picture set of the event from a picture set based on the event information of the event.

The picture set of the event may include images of a plurality of objects, or may include a picture of one object. For example, in the scenario shown in FIG. 1B-1 and FIG. 1B-2, the target information is text content: "On Sunday, I went to a zoo with my family and saw pandas and ferocious dogs"; and event information extracted from the target information includes the following information: Sunday, zoo, panda, dog, and the like. Panda pictures and dog pictures that meet both a time requirement (namely, Sunday) and a location requirement (namely, a zoo) are found from a picture set based on the event information, to obtain a picture set of the event. In this case, the picture set of the event includes pictures of "dog" and pictures of "panda", in other words, includes pictures of two objects: "dog" and "panda".

If the picture set of the event includes a picture of only one object, the electronic device 200 may select a corresponding quantity of pictures from the picture set of the event based on a quantity of pictures that a first-screen interface is able to display and based on matching degrees of pictures and/or picture scores (for example, the pictures are scored based on definition or compositions), and display the selected pictures on the first-screen interface. A quantity of selected pictures is less than or equal to the quantity of pictures that the first-screen interface is able to display.

The electronic device 200 may alternatively select, from the picture set of the event in another manner, a picture of the event that is to be displayed on the first-screen interface. For example, a picture of the event that is to be displayed on the first-screen interface is selected from the picture set of the event in descending or ascending order of picture time. For another example, a picture with a matching degree greater than or equal to a matching degree threshold is selected from the picture set of the event based on matching degrees of pictures, and then a picture of the event that is to be displayed on the first-screen interface is selected, in descending or ascending order of picture time, from the picture with a matching degree greater than or equal to the matching degree threshold.

If the picture set of the event includes pictures of a plurality of objects, to ensure that the pictures of the plurality of objects can be displayed on the first-screen interface, a corresponding quantity of pictures may be selected from pictures of each object based on a quantity of pictures that a first-screen interface is able to display and a quantity of categories, and the selected pictures are used as pictures of the object that are to be displayed on the first-screen interface. A total quantity of pictures of all the objects that are to be displayed on the first-screen interface is less than or equal to the quantity of pictures that the first-screen interface is able to display.

For example, the quantity of pictures that the first-screen interface is able to display is 16, and a picture set of a specific event includes 30 pictures of "dog" and 40 pictures of "panda". In this case, eight pictures are selected from the 30 pictures of "dog" as pictures of the object "dog" that are to be displayed on the first-screen interface, and eight pictures are selected from the 40 pictures of "panda" as pictures of the object "panda" that are to be displayed on the first-screen interface. The pictures of the plurality of objects in the event are displayed on the first-screen interface, so that the user can obtain the pictures of the plurality of objects on the first-screen interface, without turning pages to obtain the pictures of the objects in the event. This improves convenience of selecting a picture by the user.

Optionally, a picture of a specific object that is to be displayed on the first-screen interface may be selected based on matching degrees of pictures. For example, based on matching degrees between pictures and the word "panda", a picture of the object that is to be displayed on the first-screen interface is selected from pictures of the category "panda".

A picture of a specific object that is to be displayed on the first-screen interface may alternatively be selected based on picture scores. For example, pictures are scored based on definition, picture content, or compositions of the pictures; and a picture of the object that is to be displayed on the interface is selected based on scores of the pictures. Certainly, a picture of a specific object that is to be displayed on the first-screen interface may alternatively be selected from pictures of the object through random selection.

However, in comparison, when a picture of each subcategory that is to be displayed on the first-screen interface is selected based on matching degrees of pictures or picture scores, a picture displayed on the first-screen interface can have higher quality, or is more likely to be a picture that the user needs to upload. This can further improve user experience in picture selection. Optionally, after selecting pictures of objects in an event that are to be displayed on the first-screen interface, the electronic device 200 may first determine priorities of the objects, and then display the pictures of the objects on the first-screen interface based on the priorities of the objects. A display position of a picture of an object with a higher priority on the first-screen interface is closer to the front. In this way, a picture with a high priority can be preferentially displayed, to improve convenience of selecting a picture by the user.

For example, the electronic device 200 may determine a priority of each object based on a quantity of pictures of the object. For example, when a candidate picture set includes 30 pictures of "dog" and 40 pictures of "panda", a priority of "dog" is lower than a priority of "panda".

Certainly, the electronic device 200 may alternatively determine a priority of an object in another manner. For example, the electronic device 200 may determine a priority of each object in the target information based on appearance frequency or description complexity of the object. In this case, assuming that a candidate picture set of a specific event includes two objects, that is, "dog" and "panda", and the target information includes a lengthy text description of "panda", it is considered that appearance frequency and description complexity of "panda" are higher than appearance frequency and description complexity of "dog", and it is determined that a priority of "panda" is higher than a priority of "dog". For example, objects may be sorted by priority based on a distance between a cursor position at which a picture is inserted and a position of text of each object. A smaller distance indicates a higher priority. A position of text of an object is a position, on an interface, of text content that describes the object. A priority of each object is determined based on a distance between the position and a position at which a picture is inserted (that is, a cursor position). For another example, a priority of each object may be determined based on at least two of the following: a quantity of pictures of the object, appearance frequency and description complexity of the object, and a distance between a position of text of the object and a cursor position at which a picture is inserted.

When determining, based on the quantity of pictures that the first-screen interface is able to display (that is, a first picture quantity), a quantity of pictures of each object in an event that are to be displayed on the first-screen interface, the electronic device 200 may determine, according to a principle of equal distribution, the quantity of pictures of the object that are to be displayed on the first-screen interface. Certainly, the electronic device 200 may alternatively determine, in another manner, a quantity of pictures of each object that are to be displayed on the first-screen interface. For example, a quantity of pictures of each object that are to be displayed on the first-screen interface may be determined based on a proportion of pictures of the object, and a quantity of pictures of the object is positively correlated with the quantity of pictures of the object that are to be displayed on the first-screen interface. For another example, a quantity of pictures of each object that are to be displayed on the first-screen interface may be determined based on a priority of the object. A larger quantity of pictures are displayed on the first-screen interface for an object with a higher priority. In other words, a priority of an object is positively correlated with a quantity of pictures of the object that are displayed on the first-screen interface.

Optionally, the electronic device 200 may display pictures of a same object on the first-screen interface in an aggregate manner. In this way, pictures of a same object on the first-screen interface are displayed next to each other. This further improves convenience of selecting a picture by the user.

Optionally, the electronic device 200 may further display a tab page of each object. In this way, when the user selects a picture of a specific object, interference caused by a picture of another object is reduced, and user experience is improved.

For example, FIG. 6A-1 and FIG. 6A-2 are a diagram of picture display based on a plurality of categories of a single event according to an embodiment of this application. Based on the scenarios in FIG. 1A-1 to FIG. 1A-5, FIG. 1B-1, and FIG. 1B-2, the mobile phone 100 displays a Weibo post creation interface 115. The Weibo post creation interface 115 includes text content input by the user: "During National Day, I visited Shanghai Wild Animal Park with my family and saw pandas, ferocious dogs, and beautiful cats". After the user taps a picture insertion button 116 on the Weibo post creation interface 115, the mobile phone 100 obtains target information of Weibo 103 in response to the tap operation. In this case, the target information is text content information, and the text content information is specifically as follows: "During National Day, I visited Shanghai Wild Animal Park with my family and saw pandas, ferocious dogs, and beautiful cats".

The mobile phone 100 extracts event information from the target information. The event information may include a plurality of terms such as National Day, Shanghai Wild Animal Park, panda, dog, and cat. Combinatorial searching is performed based on the plurality of terms such as National Day, Shanghai Wild Animal Park, panda, dog, and cat, to select dog pictures, panda pictures, and cat pictures that meet a time requirement (namely, National Day) and a location requirement (namely, Shanghai Wild Animal Park) from pictures in Gallery 102, to obtain a picture set of the event. That is, dog pictures, panda pictures, and cat pictures that are captured at Shanghai Wild Animal Park during National Day are selected from a picture set. In this case, the target information includes event information of one event.

After the mobile phone 100 obtains the picture set of the event, because the picture set includes pictures of three objects, that is, the cat, the panda, and the dog, the mobile phone 100 determines, based on a quantity of pictures that a first-screen interface is able to display, a quantity of pictures of each object that are to be displayed on the first-screen interface; and then separately selects a corresponding quantity of pictures from the dog pictures, the panda pictures, and the cat pictures based on the quantity of pictures of each object that are to be displayed on the first-screen interface, and displays the selected pictures on the first-screen interface.

For example, it is assumed that the picture set of the event includes 10 dog pictures, 20 panda pictures, and 15 cat pictures, the quantity of pictures that the first-screen interface is able to display is 16, and the quantity of pictures of each object that are to be displayed on the first-screen interface is 4. In this case, four pictures are selected from the 10 dog pictures, and the four pictures are used as pictures of "dog" that are to be displayed on the first-screen interface; four pictures are selected from the 20 panda pictures, and the four pictures are used as pictures of "panda" that are to be displayed on the first-screen interface; and four pictures are selected from the 15 panda pictures, and the four pictures are used as pictures of "cat" that are to be displayed on the first-screen interface. Certainly, five dog pictures, six panda pictures, and five cat pictures may alternatively be selected and displayed on the first-screen interface.

In this case, the mobile phone 100 may select, from pictures of each object based on picture scores, a picture of the object that is to be displayed on the first page. For example, for the 20 panda pictures, the 20 panda pictures are scored based on picture information such as picture definition, picture content, and compositions, the 20 panda pictures are sorted based on picture scores, and the top four panda pictures with highest picture scores are selected as pictures of "panda" that are to be displayed on the first-screen interface.

The mobile phone 100 may further determine priorities of the cat, the dog, and the panda, to determine a display order of pictures of the three objects on the first-screen interface. In this case, it is assumed that the cat has a highest priority and the panda has a lowest priority.

The mobile phone 100 displays a picture selection interface 144 based on the priorities of the cat, the dog, and the panda and four pictures, to be displayed on the first-screen interface, of each of the three objects: the cat, the dog, and the panda.

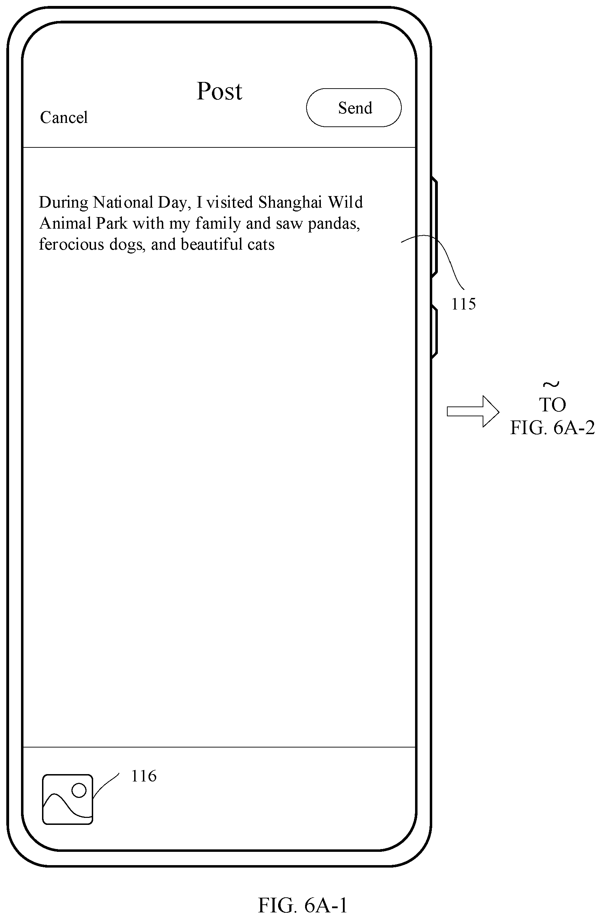

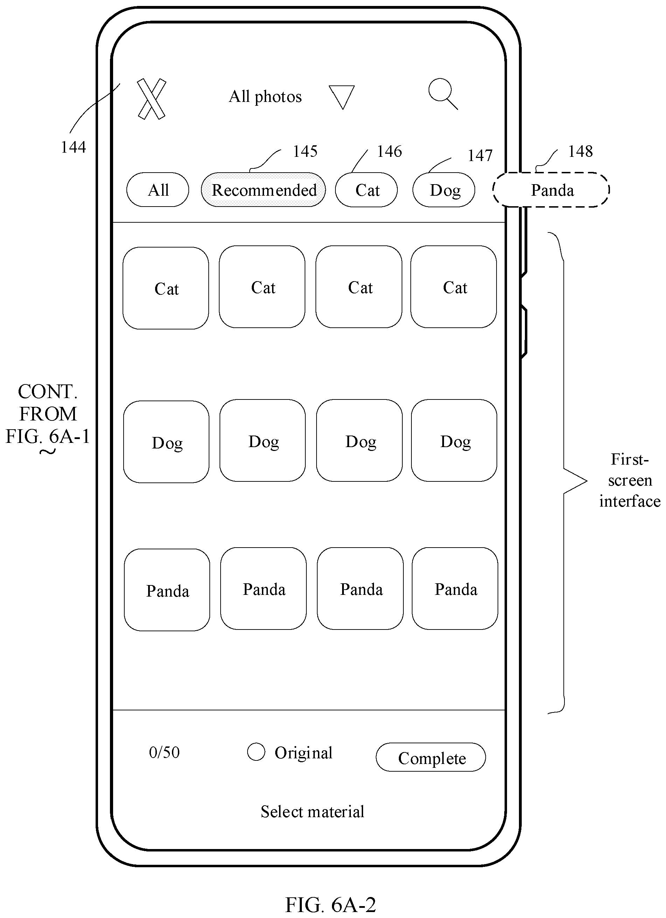

On a first-screen interface of the picture selection interface 144, four cat pictures are displayed in a first row in an aggregate manner, four dog pictures are displayed in a second row in an aggregate manner, and four panda pictures are displayed in a third row in an aggregate manner. A recommendation page button 145 is displayed on the picture selection interface 144, and FIG. 6A-2 shows a recommendation page.

Optionally, the mobile phone 100 may further display tab pages of the three objects: the cat, the dog, and the panda; and an order of tab page buttons is the same as a display order of the three objects on the first-screen interface. In this case, a display order of the three objects, that is, the cat, the dog, and the panda, on the first-screen interface is as follows: the cat, the dog, and the panda. Therefore, the mobile phone 100 displays a cat tab page button 146, a dog tab page button 147, and a panda tab page button 148 on the picture selection interface 144. The panda tab page button 148 is displayed on an interface other than the picture selection interface 144, and the user may find the panda tab page button 148 through a swipe operation. The cat tab page button 146 is closest to the recommendation page button 145, and the panda tab page button 148 is farthest away from the recommendation page button 145.

The user may tap a tab page button to trigger the mobile phone 100 to display a corresponding tab page. All pictures of the category are displayed on the tab page. For example, after the user taps the cat tab page button 146, the mobile phone 100 displays a cat tab page 149 in FIG. 6B in response to the tap operation. The cat tab page 14 may display all cat pictures on the mobile phone 100, instead of displaying only cat pictures captured at Shanghai Animal Park during National Day. FIG. 6B is a diagram of a cat tab page according to an embodiment of this application.

In FIG. 6A-2 and FIG. 6B, the mobile phone 100 displays, on the first-screen interface, dog pictures, cat pictures, and panda pictures that meet the time requirement and the location requirement, that is, displays pictures of all objects. In this way, when creating a Weibo post, the user can obtain a picture of a corresponding object on the first-screen interface, without turning pages to obtain a picture of a corresponding object; and can select, on the first-screen interface, a picture that needs to be uploaded to Weibo 103. This improves convenience of selecting a picture by the user. In addition, the dog pictures, the cat pictures, and the panda pictures are displayed in an aggregate manner and sorted by priority, so that a picture with a higher priority can be preferentially displayed, and the user can more easily and conveniently select a picture that needs to be uploaded.

In some other embodiments, if the target information includes event information of at least two events, after extracting the event information from the target information, the electronic device 200 selects a picture set of each event from a picture set based on event information of the event.

To ensure that pictures of all the events are displayed on a first-screen interface, the electronic device 200 selects a corresponding quantity of pictures from a picture set of each event based on a quantity of pictures that the first-screen interface is able to display, and uses the selected pictures as pictures of the event that are to be displayed on the first-screen interface. A total quantity of pictures of all the events that are to be displayed on the first-screen interface is less than or equal to the quantity of pictures that the first-screen interface is able to display. Quantities of pictures of different events that are displayed on the first-screen interface may be the same or different.

When a quantity of pictures of each event that are to be displayed on the first-screen interface is determined based on the quantity of pictures that the first-screen interface is able to display, the quantity of pictures of the event that are to be displayed on the first-screen interface may be determined in an equal distribution manner. For example, the quantity of pictures that the first-screen interface is able to display is 16, and there are a total of two events. In this case, a quantity of pictures of each event that are to be displayed on the first-screen interface is 8. Certainly, a quantity of pictures of each event that are to be displayed on the first-screen interface may alternatively be determined in another manner. For example, a quantity of pictures of each event that are to be displayed on the first-screen interface may be determined based on importance or a picture proportion of the event. A larger quantity of pictures are displayed on the first-screen interface for an event of higher importance or with a higher picture proportion. For example, the quantity of pictures that the first-screen interface is able to display is 16, and there are a first event and a second event in total. If importance of the first event is higher than importance of the second event, it is determined that a quantity of pictures of the first event that are to be displayed on the first-screen interface is 10, and a quantity of pictures of the second event that are to be displayed on the first-screen interface is 6.

For each event, the electronic device 200 may select a corresponding quantity of pictures from a picture set of the event based on a quantity of pictures of the event that are to be displayed on the first-screen interface, and use the selected pictures as pictures of the event that are to be displayed on the first-screen interface. For example, the picture set of the event includes 50 pictures, and the quantity of pictures of the event that are to be displayed on the first-screen interface is 8. The 50 pictures are sorted by matching degree, and the top eight pictures with highest matching degrees are selected from the 50 pictures as pictures of the event that are to be displayed on the first-screen interface. A matching degree of a picture is a degree of matching between the picture and event information. Certainly, the electronic device 200 may alternatively select, in another manner, a corresponding quantity of pictures from a picture set of an event as pictures of the event that are to be displayed on the first-screen interface. For example, a corresponding quantity of pictures may be randomly selected from pictures of the event; or pictures in the picture set of the event are scored (for example, scored based on definition or compositions), and a corresponding quantity of pictures are selected from the picture set based on scores of the pictures.

When a picture of an event that is to be displayed on the first-screen interface is selected from a picture set of the event based on a quantity of pictures of the event that are to be displayed on the first-screen interface, the picture may be selected based on a matching degree between each picture and an object (namely, what) in the event, or may be selected based on picture scores, or may be selected based on an order of picture time. When the event includes a plurality of objects (in other words, includes a plurality of pieces of what), a corresponding quantity of pictures may be selected from the objects, and a total quantity of selected pictures of the objects is made to be less than the quantity of pictures of the event that are to be displayed on the first-screen interface.

In comparison, when a picture of an event that is to be displayed on the first-screen interface is selected from a picture set of the event based on matching degrees of pictures or picture scores, a picture displayed on the first-screen interface can have higher quality, or is more likely to be a picture that the user needs to upload. This can further improve user experience in picture selection.

Optionally, the electronic device 200 may further sort a plurality of events to determine priorities of the events. A priority of an event is related to a display order of a picture of the event on the first-screen interface. Usually, a display position of a picture of an event with a higher priority on the first-screen interface is closer to the front.

For example, the electronic device may calculate importance of an event based on at least one of the following: completeness of event content, appearance frequency and description complexity, a distance between an insertion position and a position of text corresponding to the event, and time precision and location precision; and sort events based on importance of the events (in other words, determine priorities of the events). An event of high importance has a high priority.

The completeness of the event content is completeness of event information. For example, the completeness of the event content may be determined based on a missing status of 4W information (to be specific, when, where, who, and what) of the event. Higher completeness of the event content indicates higher importance of the event.

The appearance frequency and the description complexity are appearance frequency of the event in the target information and a length of a description of the event. Higher appearance frequency and description complexity indicate higher importance of the event.

The distance between the insertion position and the position of the text corresponding to the event content is a distance between a picture insertion position and the position of the text corresponding to the event in a scenario in which a picture is inserted into text. A smaller distance indicates higher importance of the event.

The time precision and the location precision are precision of time information, location information, and the like in the event. Higher precision indicates higher importance of the event. For example, time of the first event is October, and time of the second event is October 1. Time precision of the second event is higher than time precision of the first event.

When a priority of an event is determined based on at least one of the following: completeness of event content, appearance frequency and description complexity, a distance between an insertion position and a position of text corresponding to the event, and time precision and location precision, a weight may be assigned to each item, a score of each item is multiplied by the weight, and products are added up to obtain a total score of the event. Importance of events are determined based on total scores of the events, to determine priorities of the events.

In addition, priorities of events may alternatively be determined based on an occurrence order of the events. For example, an event whose occurrence time is farther away from current time has a higher priority. Alternatively, a priority of each event may be determined based on a quantity of pictures of the event. For example, a larger quantity of pictures of an event indicates a higher priority of the event.

After obtaining a picture of each event that is to be displayed on the first-screen interface and a priority of each event, the electronic device 200 may display pictures of the plurality of events on the first-screen interface. Pictures of a same event may be displayed on the first-screen interface in an aggregate manner or a non-aggregate manner.

The electronic device 200 displays the pictures of the plurality of events on the first-screen interface, so that the user can obtain the pictures of the plurality of events on the first-screen interface, without turning pages to search for the pictures of the events. This improves convenience of selecting a picture by the user. In addition, the plurality of events are further sorted, to determine an order of display positions of the events on the first-screen interface, so that a picture of an event with a high priority is preferentially displayed. This further improves convenience of selecting a picture by the user.

Optionally, if a picture set of a specific event includes a picture of one or more objects, the electronic device 200 may further display a tab page of the object. For example, if a picture set of a specific event includes a cat picture, the electronic device 200 may display a tab page including all cat pictures.

For each of the plurality of events, a picture set of the event may include pictures of a plurality of objects, or may include a picture of one object. If the picture set of the event includes a picture of only one object, the electronic device 200 may select a corresponding quantity of pictures from the picture set of the event based on a quantity of pictures of the event that are to be displayed on the first-screen interface and based on matching degrees of pictures and/or picture scores (for example, the pictures are scored based on definition or compositions) or the like, and display the selected pictures on the first-screen interface. A quantity of selected pictures is less than or equal to the quantity of pictures of the event that are to be displayed on the first-screen interface.

If the picture set of the event includes pictures of a plurality of objects, optionally, to ensure that the pictures of the plurality of objects can be displayed on the first-screen interface, a corresponding quantity of pictures may be selected from pictures of each object based on a quantity of pictures of the event that are to be displayed on the first-screen interface and a quantity of categories, and the selected pictures are used as pictures of the object that are to be displayed on the first-screen interface. A total quantity of pictures of all the objects that are to be displayed on the first-screen interface is less than or equal to the quantity of pictures of the event that are to be displayed on the first-screen interface.

For example, a quantity of pictures that the first-screen interface is able to display is 16, a quantity of pictures of a specific event that are to be displayed on the first-screen interface is 8, a picture set of the event includes 30 pictures of "dog" and 40 pictures of "panda", and a quantity of pictures of each object that are to be displayed on the first-screen interface is 4. In this case, four pictures are selected from the 30 pictures of "dog" as pictures of the object "dog" that are to be displayed on the first-screen interface, and four pictures are selected from the 40 pictures of "panda" as pictures of "panda" that are to be displayed on the first-screen interface.

The pictures of the plurality of objects in the event are displayed on the first-screen interface, so that the user can obtain the pictures of the plurality of objects on the first-screen interface, without turning pages to obtain the pictures of the objects in the event. This improves convenience of selecting a picture by the user.

Optionally, after selecting pictures of objects in an event that are to be displayed on the first-screen interface, the electronic device 200 may first determine priorities of the objects, and then display the pictures of the objects on the first-screen interface based on the priorities of the objects. A display position of a picture of an object with a higher priority on the first-screen interface is closer to the front. In this way, a picture with a high priority can be preferentially displayed, to improve convenience of selecting a picture by the user.

Optionally, the electronic device 200 may display pictures of a same object on the first-screen interface in an aggregate manner. In this way, pictures of a same object on the first-screen interface are displayed next to each other. This further improves convenience of selecting a picture by the user.

Optionally, the electronic device 200 may further display a tab page of each object. In this way, when the user selects a picture of a specific object, interference caused by a picture of another object is reduced, and user experience is improved.

For example, FIG. 7A and FIG. 7B are a diagram of picture display based on a plurality of events according to an embodiment of this application. Based on the scenario in FIG. 1A-1 to FIG. 1A-5, after starting Weibo 103, the mobile phone 100 displays a Weibo post creation interface 159. The Weibo post creation interface 159 includes text content input by the user: "On October 1, I visited Shanghai Wild Animal Park with my family" and "On October 2, I visited Haichang Ocean Park with my family and watched an orca show".

After the user taps a picture insertion button 116 on the Weibo post creation interface 159, the mobile phone 100 obtains target information of Weibo 103 in response to the tap operation. In this case, the target information is text content information, and the text content information is specifically as follows: "On October 1, I visited Shanghai Wild Animal Park with my family" and "On October 2, I visited Haichang Ocean Park with my family and watched an orca show".

The mobile phone 100 extracts event information from the target information, to obtain event information of an event 1 and event information of an event 2. The event information of the event 1 may include a plurality of terms such as October 2, Haichang Ocean Park, and orca. The event information of the event 2 may include a plurality of terms such as October 1 and Shanghai Wild Animal Park.

The mobile phone 100 performs picture searching based on event information of each event. Specifically, for the event 1, combinatorial searching is performed based on the plurality of terms such as October 2, Haichang Ocean Park, and orca, and orca pictures that meets a time requirement (namely, October 2) and a location requirement (namely, Haichang Ocean Park) are selected from pictures in Gallery 102, to obtain a candidate picture set of the event. That is, orca pictures captured at Haichang Ocean Park on October 2 are selected from a picture set.

For the event 2, combinatorial searching is performed based on the plurality of terms such as October 1 and Shanghai Wild Animal Park, and pictures that meets a time requirement (namely, October 1) and a location requirement (namely, Shanghai Wild Animal Park) are selected from pictures in Gallery 102, to obtain a candidate picture set of the event. That is, pictures captured at Shanghai Wild Animal Park on October 1 are selected from a picture set.

When the mobile phone 100 determines importance of the event 1 and the event 2, because event content of the event 2 does not include what information but event content of the event 1 includes what information (namely, orca), the mobile phone 100 determines that completeness of the event content of the event 1 is higher than completeness of the event content of the event 2, and importance of the event 1 is higher than importance of the event 2.

To be specific, on a first-screen interface, a display position of a picture of the event 1 is in front of a display position of a picture of the event 2.

The mobile phone 100 selects pictures from the picture set of the event 1 and the picture set of the event 2 based on a quantity of pictures that the first-screen interface is able to display. In this case, it is assumed that the quantity of pictures that the first-screen interface is able to display is 16, and a quantity of pictures of each of the event 1 and the event 2 that are to be displayed on the first-screen interface is 8. The mobile phone 100 may select eight orca pictures from the picture set of the event 1 and eight pictures from the picture set of the event 2 based on picture scores and/or matching degrees of pictures.

The mobile phone 100 displays a picture selection interface 151 based on pictures of each event that are to be displayed on the first-screen interface and a priority of the event. The picture selection interface 151 includes a recommendation page button 151, and FIG. 7B shows a recommendation page. Pictures of the event 1 and pictures of the event 2 are displayed on a first-screen interface of the picture selection interface 151. In addition, the eight orca pictures of the event 1 are displayed in an aggregate manner, and the eight pictures of the event 2 are displayed in an aggregate manner.

In this way, when the user creates a Weibo post, if the user needs to insert a picture into the Weibo post, the user may obtain the pictures of the event 1 and the event 2 on the first-screen interface of the picture selection interface 151, without turning pages to search for the pictures of the event 1 and the event 2. This is more convenient. In addition, a plurality of pictures of a same event are displayed in an aggregate manner, and a picture of an event with a higher priority is preferentially displayed, to further convenience of selecting a picture by the user.

In this case, the mobile phone 100 further displays an orca tab page. To be specific, an orca tab page button 153 is further displayed on the picture selection interface 151. The user may tap the orca tab page button 153 to trigger the mobile phone 100 to display the orca tab page.

In the scenarios shown in FIG. 3A-1, FIG. 3A-2, FIG. 4A to FIG. 4C, FIG. 5A-1 to FIG. 5A-3, FIG. 6A-1, FIG. 6A-2, FIG. 7A, and FIG. 7B, if the user needs to upload a picture when creating copy (for example, a note or a Weibo post), the mobile phone 100 performs picture recommendation based on obtained text information (for example, a keyword and text content input by the user), intelligently sorts recommended pictures, and displays the pictures on a first-screen interface. Pictures of a plurality of elements (for example, a plurality of keywords, a plurality of events, a plurality of objects in an event, or a plurality of subcategories of a keyword) are displayed on the first-screen interface, so that the user can obtain, on the first-screen interface, a picture that the user wants to upload. This is simpler and more convenient.

In some embodiments, when performing picture searching based on event information of an event, the electronic device 200 performs searching based on information of a plurality of dimensions. For example, combinatorial searching is performed based on dimension information such as time, a location, and an object of the event. In embodiments of this application, if picture searching is performed based on event information and no search result is obtained, intelligent rollback-based searching may be performed to obtain a search result.

Intelligent rollback-based searching is searching performed after information of one or more dimensions is removed. For example, the event information includes a plurality of terms such as October 2, Haichang Ocean Park, and orca. When picture searching is performed based on the plurality of terms, no matching picture is found (in other words, no search result is obtained). In this case, at least one of October 2, Haichang Ocean Park, and orca may be removed, and then picture searching is performed. It is assumed that information of a time dimension, that is, October 2, is removed, and then picture searching is performed based on two terms: Haichang Ocean Park and orca, to locate an orca picture captured at Haichang Ocean Park.

In embodiments of this application, when no result is obtained in picture searching, intelligent rollback-based searching may be performed, to avoid poor user experience due to a failure to obtain a search result.

In the foregoing embodiments, during picture selection, the electronic device 200 may first perform similarity clustering on pictures; and then select one or more preferred pictures from pictures in a same cluster, and make a display position of the preferred picture in the cluster be in front of a display position of a non-preferred picture in the cluster. This can avoid interference caused by a plurality of repeated similar pictures to the user during picture selection, and further improve convenience and experience of selecting a picture by the user.

For example, in a scenario with a single keyword and a single subcategory, after selecting a picture set of the keyword from a picture set, the electronic device 200 performs similar-picture clustering on the picture set of the keyword to obtain a similar-picture set. Optionally, the electronic device 200 may aggregate and classify similar pictures based on information such as picture content of pictures, capture time of pictures, and capture locations of pictures, to generate the similar-picture set.

For each similar-picture set, pictures are sorted, and a preset quantity of pictures ranked top are selected as preferred pictures. Optionally, for similar pictures in a same similar-picture set, the electronic device 200 may score the pictures based on information such as picture compositions, picture colors, and picture definition, to obtain scores of the similar pictures; sort the similar pictures based on the scores of the similar pictures; and select a preferred picture based on the scores of the pictures.

When displaying a picture matching the keyword, for pictures in a same similar-picture set, the electronic device 200 makes a display position of a preferred picture in front of a display position of a non-preferred picture.

For example, FIG. 8A and FIG. 8B are a diagram of optimizing sorting of similar pictures according to an embodiment of this application. After the mobile phone 100 displays a cup template details interface 154 of RedNote 104 and the user taps a "Use now" button on the cup template details interface 154, the mobile phone 100 displays a picture selection interface 155.

After the user taps the "Use now" button on the cup template details interface 154, the mobile phone 100 obtains target information of RedNote 104. In this case, the target information includes a keyword "cup".

The mobile phone 100 selects, from pictures in Gallery 102, pictures matching the cup, to obtain a picture set of the cup; and perform similar-picture clustering on the picture set of the cup to obtain a similar-picture set. It is assumed that a picture 156, a picture 158, and a picture 159 are pictures in a same similar-picture set, and a picture 157, a picture 160, and a picture 161 are pictures in a same similar-picture set. Aesthetic evaluation is performed on the pictures in the two similar-picture sets based on information such as picture compositions, picture colors, and picture definition, to obtain scores of the pictures. In this case, in a same similar-picture set, the picture 156 has a highest score, the score of the picture 156 is greater than a score of the picture 158, and the score of the picture 158 is greater than a score of the picture 159. The picture 156 is selected as a preferred picture in the similar-picture set, and the picture 157 and the picture 158 are non-preferred pictures in the similar-picture set.

Similarly, in a same similar-picture set, the picture 157 has a highest score, the score of the picture 157 is greater than a score of the picture 160, and the score of the picture 160 is greater than a score of the picture 161. The picture 157 is selected as a preferred picture in the similar-picture set, and the picture 160 and the picture 161 are non-preferred pictures in the similar-picture set.

On the picture selection interface 155, for a same similar-picture set, the picture 156 with a highest score is displayed in a frontmost position, and the picture 159 with a lowest score is displayed in a rearmost position. Similarly, for a same similar-picture set, the picture 157 with a highest score is displayed in a frontmost position, and the picture 161 with a lowest score is displayed in a rearmost position.

For ease of describing the solutions provided in embodiments of this application, the following describes the solutions with reference to a block diagram of a process of picture recommendation and display based on a keyword and text content in FIG. 9.

As shown in FIG. 9, when obtaining a keyword of an application, the electronic device 200 performs picture searching based on the keyword. When obtaining text of the application, the electronic device 200 may extract event information from the text, and perform picture searching based on the event information.

During specific application, an application may invoke a picture selector (for example, PhotoPicker) to input a keyword or text content to a gallery application. After obtaining the keyword or the text, the picture selector may perform subsequent picture recommendation and picture display based on the keyword or the text. The picture selector may be a component of the gallery application.

For example, in FIG. 3A-1, after the user taps the "Use now" button 112, RedNote 104 invokes PhotoPicker, and inputs a keyword "pet" to Gallery 102. For example, in FIG. 6A-1, after the user taps the picture insertion button 116, Weibo 103 invokes PhotoPicker, and inputs the following text to Gallery 102: "During National Day, I visited Shanghai Wild Animal Park with my family and saw pandas, ferocious dogs, and beautiful cats".

After obtaining the text sent by the application, the electronic device 200 intelligently generates an event group, to be specific, parses text content to extract event information (4W, when, where, who, what). As shown in FIG. 9, event information of an event 1, an event 2, ..., and an event n may be extracted. n is a positive integer greater than or equal to 1.

If event information of a plurality of events is extracted, multi-event intelligent sorting is performed, to be specific, the plurality of events are sorted. Specifically, importance of an event may be calculated based on information such as completeness of event content, appearance frequency and description complexity, a picture insertion position and a position in text, or time precision and location precision, and then events are sorted by priority based on importance of the events.

Optionally, if a quantity of events is greater than a threshold, a specific quantity of target events may be selected based on importance, and a picture of the target event is displayed on a first-screen interface. For example, the threshold is 3. To be specific, if the quantity of events is greater than 3, the top three events with highest importance are selected based on importance of the events, and pictures of the three events are displayed on the first-screen interface.

Optionally, when picture searching is performed based on event information, if no search result is obtained, intelligent rollback-based searching may be further performed. For related descriptions of the intelligent rollback-based searching, refer to the foregoing descriptions. Details are not described herein again.

If picture searching is performed based on event information, pictures of events may be obtained. As shown in FIG. 9, a picture of the event 1, a picture of the event 2, ..., and a picture of the event n may be obtained.

After a search result is obtained through picture searching, search result classification may be performed.

The search result classification may be classifying objects in an event. For example, in the scenario in FIG. 6A-1 and FIG. 6A-2, the event includes three objects: the cat, the dog, and the panda; and search result classification may be further performed on the cat, the dog, or the panda. In this case, it is assumed that search result classification is performed on cat pictures to obtain a classification result. The classification result indicates that the cat pictures include 20 pictures of a cat wearing a hat and 30 pictures of a cat wearing a scarf. In this case, during selection of a picture of "cat" that is to be displayed on the first-screen interface, to ensure that cats in two states, that is, wearing a scarf and wearing a hat, are displayed on the first-screen interface, a corresponding quantity of pictures may be separately selected from the 20 pictures of a cat wearing a hat and the 30 pictures of a cat wearing a scarf based on a quantity of pictures of "cat" that are to be displayed on the first-screen interface, and the selected pictures are used as pictures to be displayed on the first-screen interface.

The search result classification may alternatively be classifying pictures of a keyword. For example, in the scenarios in FIG. 5A-1 to FIG. 5A-3, FIG. 5B-1, and FIG. 5B-2, search result classification may be further performed on pictures of graduation photos. For specific content, refer to the foregoing descriptions. Details are not described herein again.

After search result classification is performed, similar-picture clustering and aesthetic evaluation may be further sequentially performed. The similar-picture clustering and the aesthetic evaluation are intended to select a preferred picture from a plurality of similar pictures, to avoid interference caused by an excessively large quantity of repeated similar pictures to the user during picture selection.

The similar-picture clustering is to aggregate and classify similar pictures based on information such as picture content, capture time, and capture locations of pictures, to generate a similar-picture set. The aesthetic evaluation is to score similar pictures in a same similar-picture set based on information such as compositions, colors, and definition of the pictures, and sort the pictures based on scores.

Similar-picture clustering and aesthetic evaluation may be performed on an event, an object in an event, a keyword, or a subcategory of a keyword.

For example, in a scenario with a plurality of keywords, after a picture set of each keyword is found from a picture set, similar-picture clustering is further performed on the picture set of the keyword, to obtain a similar-picture set and a picture that is not clustered into the similar-picture set. For each similar-picture set, aesthetic evaluation is performed on similar pictures, and then a preferred picture is selected based on scores of the similar pictures. A picture of the key that is to be displayed on the first-screen interface is selected from preferred pictures and the picture that is not clustered into the similar-picture set.

It should be noted that the search result classification, the similar-picture clustering, and the aesthetic evaluation are optional steps, in other words, the three steps may not be performed.

In a step of completeness display calculation, the electronic device 200 may properly select a corresponding quantity of pictures from pictures of each event, pictures of an object in an event, pictures of a keyword, or pictures of a subcategory of a keyword based on a quantity of pictures that the first-screen interface is able to display, to ensure that pictures of a plurality of events are displayed on the first-screen interface (for example, in the scenario shown in FIG. 7A and FIG. 7B), pictures of a plurality of keywords are displayed on the first-screen interface (for example, in the scenario shown in FIG. 5A-1 to FIG. 5A-3), pictures of a plurality of objects in an event are displayed on the first-screen interface, or pictures of a plurality of subcategories are displayed on the first-screen interface (for example, in the scenarios shown in FIG. 3A-1, FIG. 3A-2, and FIG. 4A to FIG. 4C).

After the completeness display calculation is performed, a picture to be displayed on the first-screen interface may be obtained, that is, a list of recommended pictures is obtained. A recommendation page is displayed based on the list of recommended pictures.

It can be learned from the foregoing descriptions that, in embodiments of this application, during picture selection by a user, richness of content displayed on the first screen can be ensured, to ensure that the user can locate a picture of a core element on the first page. The richness of content may mean that a plurality of key elements expressed in target information (for example, text or a keyword) or a picture of an element related to target information can be displayed on a first-screen interface (to be specific, the first page of a picture selection interface), to avoid a case that a picture of a key element can be found only by swiping a screen to turn pages. This can improve convenience of selecting a picture by the user.

FIG. 10A is a block diagram of a process of a picture display method according to an embodiment of this application. The method may include the following steps.

Step S1001: An electronic device 200 displays an interface of an application.

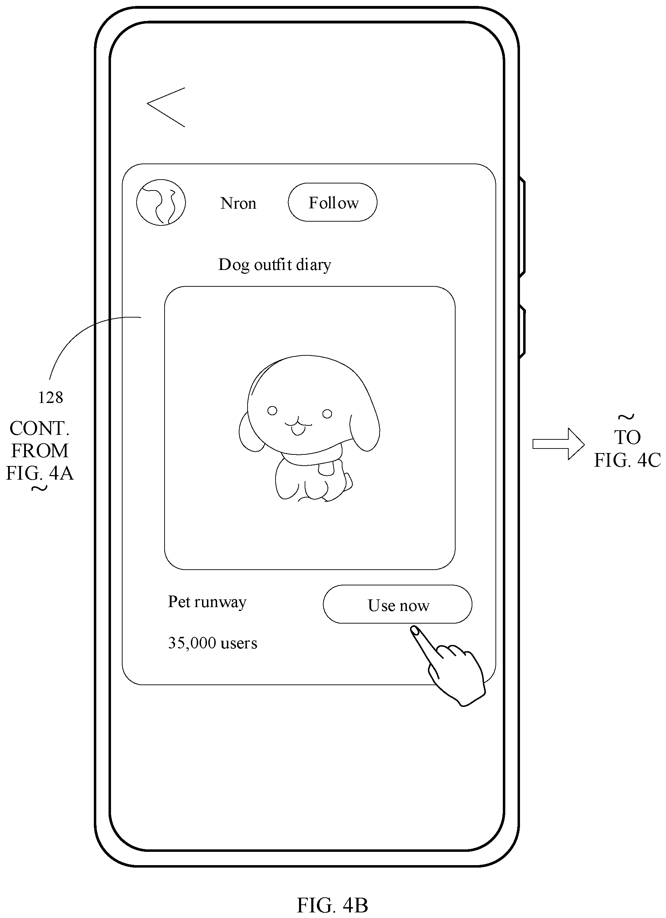

For example, the application may be Weibo 103 or RedNote 104 in the foregoing descriptions. The interface of the application may be the Weibo post creation interface 159 in FIG. 7A or the dog outfit template interface 128 in FIG. 4B.

Step S1002: The electronic device 200 obtains target information of the application in response to a target operation on the interface of the application, where the target information is related to interface content of the application, and the target operation is used to upload a picture.

For example, the target operation may be a tap operation for the picture insertion button 116 on the Weibo post creation interface 159 in FIG. 7A, or a tap operation for the "Use now" button on the dog outfit template interface 128 in FIG. 4B.

The target information may include text content or a keyword.

The target information may be information sent by the application in response to the target operation. For example, RedNote 104 may invoke PhotoPicker to send a keyword "dog" to Gallery 102 in response to the tap operation for the "Use now" button on the dog outfit template interface 128 in FIG. 4B.

The interface content of the application may be built-in display content of the interface of the application. For example, "Dog outfit diary" is displayed on the dog outfit template interface 128 in FIG. 4B. Alternatively, the interface content of the application may be content input by a user on the interface of the application. For example, the Weibo post creation interface 159 in FIG. 7A includes text content input by the user.

Step S1003: The electronic device 200 obtains a target candidate picture set of each target element from a picture set based on a first picture quantity and the target information, where the target element is determined based on the target information, the target candidate picture set includes at least one target candidate picture, a total quantity of target candidate pictures of all target elements is less than or equal to the first picture quantity, and the first picture quantity is a quantity of pictures that a first-screen interface of a picture selection interface is able to display.

The target element may be a keyword in the target information. For example, in FIG. 5A-3, the target information includes a plurality of keywords such as graduation photo, podium, classroom, and playground. The graduation photo, the podium, the classroom, and the playground are target elements.

The target element may be a category of an object described by a keyword in the target information. For example, in FIG. 3A-2, the target information includes a keyword: pet. The pet includes two categories (or referred to as subcategories): a cat and a dog. The cat and the dog are target elements.

The target element may be an event described in the target information. For example, in FIG. 7A and FIG. 7B, the target information is text content sent by Weibo. The text content describes an event 1 and an event 2. The event 1 and the event 2 are target elements.

The target element is an object in an event described in the target information. For example, in FIG. 6A-1 and FIG. 6A-2, the target information is text content sent by Weibo. An event described by the text content includes three objects: a cat, a dog, and a panda. The cat, the dog, and the panda are target elements. Usually, the object in the event is what in the event, and what may be an animal, a plant, an activity, or another object. This is not limited herein.

That the total quantity of target candidate pictures of all the target elements is less than or equal to the first picture quantity means that, to enable the first-screen interface to display the target candidate pictures of all the target elements, a total quantity of pictures of all the target elements that are to be displayed on the first-screen interface is made to be less than or equal to the quantity of pictures that the first-screen interface is able to display.

For example, when the target element is a keyword, based on the scenario with a plurality of keywords in FIG. 5A-1 to FIG. 5A-3, a quantity of pictures of each keyword that are displayed on the first-screen interface is 4. In this case, a target candidate picture set of the graduation photo includes four pictures displayed on the first-screen interface (that is, target candidate pictures), a target candidate picture set of the podium includes four pictures displayed on the first-screen interface (that is, target candidate pictures), a target candidate picture set of the classroom includes four pictures displayed on the first-screen interface (that is, target candidate pictures), a target candidate picture set of the playground includes four pictures displayed on the first-screen interface (that is, target candidate pictures). For a specific selection process, refer to the foregoing descriptions. Details are not described herein again.

For another example, when the target element is a subcategory of a keyword, based on the scenario with a single keyword and a plurality of sub-states in FIG. 4A to FIG. 4C, a quantity of pictures of each state that are displayed on the first-screen interface is 4. Target candidate picture sets of a state 1 to a state 4 each include four pictures displayed on the first-screen interface (that is, target candidate pictures).

For another example, when the target element is an event, based on the multi-event scenario shown in 7, a quantity of pictures of each event that are displayed on the first-screen interface is 8. In this case, target candidate picture sets of the event 1 and the event 2 each include eight pictures displayed on the first-screen interface (that is, target candidate pictures).

A target candidate picture of a target element is a picture of the target element that is displayed on the first-screen interface. Quantities of pictures of different target elements that are displayed on the first-screen interface may be the same or different. This is not limited herein.

When a target candidate picture of each target element is obtained from a picture set based on a quantity of pictures of the target element that are to be displayed on the first-screen interface, the target candidate picture may be selected based on at least one of the following: an order of picture time, picture scores, and matching degrees of pictures. For a specific selection process, refer to the foregoing descriptions. Details are not described herein again.

Step S1004: The electronic device 200 displays the target candidate picture of each target element on the first-screen interface.

For example, based on the scenario shown in FIG. 7A and FIG. 7B, the mobile phone 100 displays pictures of the event 1 and the event 2 on the first-screen interface.

It should be noted that, usually, all pictures displayed on the first-screen interface are completely displayed. To be specific, all the pictures are completely displayed in a display region of the first-screen interface. However, in some cases, due to a typesetting problem of a picture on the first-screen interface or the like, some pictures displayed on the first-screen interface are not completely displayed. To be specific, a part of pictures are displayed on the first-screen interface; and the other part of pictures are not displayed on the first-screen interface, the picture cannot be completely viewed on the first-screen interface, and only a part of the picture can be viewed on the first-screen interface.

For example, based on a diagram of picture display on a first-screen interface shown in FIG. 10B, a picture 162 to a picture 165 cannot be completely displayed on the first-screen interface. To be specific, only a part of the picture 162 to the picture 165 can be viewed on the first-screen interface. The picture 162 is used as an example for description. The picture 162 includes two parts: a part 1 and a part 2. The part 1 is displayed on the first-screen interface, and the part 2 is not displayed on the first-screen interface. To be specific, only the part 1 of the picture 162 can be viewed on the first-screen interface, and the part 2 cannot be viewed on the first-screen interface.

In this embodiment of this application, for a picture that is not completely displayed on the first-screen interface, whether the picture is displayed on the first-screen interface may be determined based on a proportion of an area of a part of the picture that is displayed on the first-screen interface to an area of the entire picture. The proportion may be set according to an actual requirement. For example, the proportion may be set to 50%. To be specific, when an area of a part of a picture that is displayed on the first-screen interface exceeds 50% of an area of the entire picture, the picture is considered as a picture displayed on the first screen; otherwise, the picture is considered as a picture not displayed on the first-screen interface.

It can be learned from the foregoing descriptions that, in this embodiment of this application, the target candidate picture of each target element can be displayed on the first-screen interface, so that the user can obtain pictures of a plurality of target elements on the first-screen interface, without turning pages to obtain the pictures of the target elements, so that the user can more easily and quickly select a picture that needs to be uploaded. This improves user experience.

In some possible implementations, if at least two target elements are included, the at least two target elements include a first target element and a second target element. In a process of displaying the target candidate picture of each target element on the first-screen interface, the electronic device 200 may display a target candidate picture of the first target element and a target candidate picture of the second target element on the first-screen interface based on a priority of the first target element and a priority of the second target element, where the priority of the first target element is higher than the priority of the second target element, and a display position of the target candidate picture of the first target element is in front of a display position of the target candidate picture of the second target element.

For example, when the target element is an event, the priority of the first target element and the priority of the second target element may be determined based on importance of the two target elements. When the target element is a keyword, a priority of the keyword may be determined based on an order of obtaining the keyword. When the target element is an object in an event, a priority of the object may be determined based on a quantity of pictures of the object. When the target element is a subcategory of a keyword, a priority of an object may be determined based on a quantity of pictures of the subcategory.

In some possible implementations, the first target element in the target element includes a first sub-element and a second sub-element. In this case, in a process of displaying the target candidate picture of each target element on the first-screen interface, the electronic device 200 may determine a priority of the first sub-element and a priority of the second sub-element; and display a picture of the first sub-element and a picture of the second sub-element on the first-screen interface based on the priorities, where the priority of the first sub-element is higher than the priority of the second sub-element, a display position of the picture of the first sub-element is in front of a display position of the picture of the second sub-element, and the target candidate picture of the target element includes the picture of the first sub-element and the picture of the second sub-element.

For example, when the target element is an event, a sub-element may be an object in the event. For a method for determining a priority of the object, refer to the foregoing descriptions. Details are not described herein again. When the target element is a keyword, a sub-element is a subcategory of the keyword. For example, subcategories of the keyword "graduation photo" are wearing a hat and wearing sunglasses. For example, a priority of each sub-element may be determined based on a quantity of pictures of the sub-element, and the quantity of pictures of the sub-element is in direct proportion to the priority of the sub-element.

In some possible implementations, the electronic device 200 may further display a tab page of the target element or a tab page of a sub-element on the picture selection interface, where the tab page of the target element includes the target candidate picture of the target element, the tab page of the sub-element includes a picture of the sub-element, and the target element includes the sub-element.

In some possible implementations, in a process of obtaining the target candidate picture set of each target element from the picture set based on the first picture quantity and the target information, the electronic device 200 may obtain a candidate picture set of each target element from the picture set based on the target information; and for each target element, select the target candidate picture from the candidate picture set, where a quantity of selected target candidate pictures is determined based on the first picture quantity, and the quantity of selected target candidate pictures is a quantity of pictures of the target element that are displayed on the first-screen interface. The picture set may include pictures in Gallery 102.

In some possible implementations of the first aspect, in a process of selecting the target candidate picture from the candidate picture set, the electronic device 200 may perform similar-picture clustering on the candidate picture set to obtain a similar-picture set; for each similar-picture set, sort similar pictures in the similar-picture set, and then select a preset quantity of similar pictures that are ranked top, where the preset quantity of similar pictures that are ranked top are target similar pictures in the similar-picture set; and select the target candidate picture from the target similar pictures in each similar-picture set and a candidate picture that is not clustered into the similar-picture set.

The target similar picture may be the preferred picture in the foregoing descriptions. Pictures may be scored based on aesthetic evaluation, and the preferred picture is selected based on scores.

In some possible implementations, on the picture selection interface, a display position of the target similar picture in the similar-picture set is in front of a display position of a non-target similar picture in the similar-picture set.

In some possible implementations, if the target element includes at least two sub-elements, the electronic device may separately perform similar-picture clustering on pictures of the sub-elements to obtain a similar-picture set of each sub-element, where the candidate picture set includes the pictures of the sub-elements.

In some possible implementations, the target information is text information obtained based on the interface content of the application.

In some possible implementations, the target element is an event described in the target information, an object in an event described in the target information, a keyword in the target information, or a category of an object described by a keyword in the target information (for example, a subcategory of the keyword).

In some possible implementations, the target element is an event or an object in an event. In a process of obtaining the candidate picture set of each target element from the picture set based on the target information, the electronic device 200 may extract event information of the event from the target information; and perform picture searching in the picture set by using the event information, to obtain a candidate picture set of each event or each object in the event. When at least two events are included, the electronic device 200 may further determine importance of each event, and sort the at least two events by priority based on the importance of each event, to determine an order of display positions of pictures of the events on the first-screen interface.

In some possible implementations, if the electronic device 200 obtains no picture matching the event information when performing picture searching in the picture set based on the event information of the event, the electronic device 200 may further perform picture searching in the picture set again based on target event information, where the target event information is event information obtained by removing information of one or more dimensions from the event information. That is, intelligent rollback-based searching is performed.

In some possible implementations, the target element is a category of an object described by a keyword. In a process of obtaining the candidate picture set of each target element from the picture set based on the target information, the electronic device 200 may perform picture searching based on the keyword in the target information, to obtain a search result of the keyword; and classify the search result of the keyword to obtain a target candidate picture set of each category.

It should be noted that, for same or similar parts between this embodiment and the foregoing embodiments, refer to the foregoing corresponding content. Details are not described herein again.

FIG. 11 is a block diagram of a process of a picture display method according to an embodiment of this application. The method may include the following steps.

Step S1101: An electronic device 200 displays an interface of an application.

Step S1102: The electronic device 200 obtains target information of the application in response to a target operation on the interface of the application, where the target information is related to interface content of the application, and the target operation is used to upload a picture.

Step S1103: The electronic device 200 obtains a picture of each target element from a picture set based on the target information, where the target element is determined based on the target information.

Step S1104: The electronic device 200 determines a priority of each of at least two target elements.

The target element is an event described in the target information, an object in an event described in the target information, a keyword in the target information, or a category of an object described by a keyword in the target information.

When the target element is an event, event information of at least two events is extracted from the target information, a priority of each of the at least two events is determined based on the event information, and a picture (or a picture set) of each event is found from the picture set by using event information of the event.

When the target element is a keyword, a picture of each keyword may be found from the picture set by using the keyword.

When the target element is an object in an event, event information of the event is extracted from the target information, and a picture (or a picture set) of each event is found from the picture set by using event information of the event, to obtain a picture of each object in the event.

When the target element is a subcategory of a keyword, a picture of the keyword may be found from the picture set by using the keyword, and then search result classification is performed on the picture of the keyword, to obtain a picture of each subcategory.

Step S1105: The electronic device 200 displays a picture of each target element on a picture selection interface based on the priority of the target element, where the at least two target elements include a first target element and a second target element, a priority of the first target element is higher than a priority of the second target element, and a display position of a picture of the first target element on the picture selection interface is in front of a display position of a picture of the second target element on the picture selection interface.

The electronic device 200 may first display a picture with a high priority, and then display a picture with a low priority.

In this way, all target elements are sorted by priority, and a display position of a picture related to a target element with a high priority is in front of a display position of a picture related to a target element with a low priority, so that the picture related to the target element with a high priority is preferentially displayed. This improves convenience of selecting a picture by a user.

In some possible implementations, the first target element among the target elements includes a first sub-element and a second sub-element, a priority of the first sub-element is higher than a priority of the second sub-element, a display position of a picture of the first sub-element on the picture selection interface is in front of a display position of a picture of the second sub-element on the picture selection interface, and the picture of the target element includes the picture of the first sub-element and the picture of the second sub-element.

In some possible implementations, in a process of obtaining the picture of each target element from the picture set based on the target information, the electronic device 200 may obtain a candidate picture set of each target element from the picture set based on the target information; for each target element, cluster candidate pictures in the candidate picture set of the target element, to obtain at least one similar-picture set; for each similar-picture set, sort similar pictures in the similar-picture set, and then select a preset quantity of similar pictures that are ranked top, where the preset quantity of similar pictures that are ranked top are target similar pictures in the similar-picture set; and for each target element, select the picture of the target element from the target similar pictures in the similar-picture set and a candidate picture that is not clustered into the similar-picture set.

In some possible implementations, when the target element is an event or an object in an event, the electronic device may extract event information of the event from the target information, and select a picture of each event or a picture of each object in an event from the picture set by using the event information.

In some possible implementations, when the target element is a category of an object described by a keyword, the electronic device may select a picture of the keyword from the picture set by using the keyword, and then classify a search result of the picture of the keyword to obtain a picture of each category.

In some possible implementations of the second aspect, when the target element is a keyword, a priority of each keyword is determined based on an input order of keywords. A keyword input earlier has a higher priority than a keyword input later.

In some possible implementations, when the target element is an event, importance of each event is determined based on at least one of the following: event content completeness, description complexity, time and location precision, and a distance between a position of the event and a position at which a cursor is inserted. An event of higher importance has a higher priority.

It should be noted that, for same or similar parts between this embodiment and the foregoing embodiments, refer to the foregoing corresponding content. Details are not described herein again.

A person skilled in the art can clearly understand that, for ease and brevity of description, division into the foregoing functional units or modules is merely used as an example for description. During actual application, the foregoing functions may be allocated to different functional units or modules for implementation according to a requirement. To be specific, an internal structure of the apparatus is divided into different functional units or modules to implement all or some of the functions described above. Functional units or modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely for ease of distinguishing between the functional units or modules, but are not intended to limit the protection scope of this application. For specific operating processes of the units or modules in the foregoing system, refer to corresponding processes in the method embodiments. Details are not described herein again.

When the integrated unit is implemented in a form of a software functional unit and sold or used as an independent product, the integrated unit may be stored in a computer-readable storage medium. Based on such an understanding, in this application, all or some of the processes of the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code. The computer program code may be in a form of source code, in a form of object code, in a form of an executable file, in some intermediate forms, or the like. The computer-readable medium may include at least the following: any entity or apparatus that can carry computer program code to a photographing apparatus/terminal device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk drive, a magnetic disk, or a compact disc. In some jurisdictions, according to legislation and patent practice, the computer-readable medium cannot be an electrical carrier signal or a telecommunication signal.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of this application.

In embodiments provided in this application, it should be understood that the disclosed apparatus, electronic device, and method may be implemented in other manners. For example, the described apparatus/electronic device embodiments are merely examples. For example, division into the modules or units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

The electronic device provided in embodiments of this application may include a memory, a processor, and a computer program stored in the memory and capable of running in the processor. When the processor executes the computer program, the method according to any one of the foregoing method embodiments is implemented.

An embodiment of this application further provides a computer-readable storage medium. The computer-readable storage medium stores a computer program. When the computer program is executed by a processor, the steps in the foregoing method embodiments may be implemented.

An embodiment of this application provides a computer program product. When the computer program product is run on an electronic device, the electronic device is enabled to implement the steps in the foregoing method embodiments when executing the computer program product.

An embodiment of this application further provides a chip system. The chip system includes a processor. The processor is coupled to a memory. The processor executes a computer program stored in the memory, to implement the method in the foregoing method embodiments. The chip system may be a single chip or a chip module including a plurality of chips.

In the foregoing embodiments, descriptions of embodiments have respective focuses. For a part that is not described in detail or recorded in an embodiment, refer to related descriptions in other embodiments. It should be understood that sequence numbers of the steps in the foregoing embodiments do not mean an execution sequence. An execution sequence of processes should be determined based on functions and internal logic of the processes, and should not be construed as any limitation on implementation processes of embodiments of this application. In addition, in the descriptions of this specification of this application and the appended claims, the terms "first", "second", "third", and the like are merely intended for differentiation in descriptions, and shall not be understood as an indication or implication of relative importance or an implicit indication of a quantity of indicated technical features. Therefore, a feature limited by "first", "second", "third", or "fourth" may explicitly or implicitly include one or more features. In addition, it should be understood that, in embodiments of this application, at least one includes one or more, where a plurality of means two or more. In embodiments of this application, "and/or" describes only an association relationship between associated objects, and indicates that three relationships may exist. For example, A and/or B may indicate the following three cases: Only A exists, both A and B exist, and only B exists. In addition, the character "/" in this specification usually indicates an "or" relationship between the associated objects.

Reference to "an embodiment", "some embodiments", or the like described in this specification of this application indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A picture display method, wherein the method comprises:
displaying an interface of an application;
obtaining target information of the application in response to a target operation on the interface of the application, wherein the target information is related to interface content of the application, and the target operation is used to upload a picture;
obtaining a target candidate picture set of each target element from a picture set based on a first picture quantity and the target information, wherein the target element is determined based on the target information, the target candidate picture set comprises at least one target candidate picture, a total quantity of target candidate pictures of all target elements is less than or equal to the first picture quantity, and the first picture quantity is a quantity of pictures that a first-screen interface of a picture selection interface is able to display; and
displaying the target candidate picture of each target element on the first-screen interface.

2. The method according to claim 1, wherein if at least two target elements are comprised, the at least two target elements comprise a first target element and a second target element; and displaying the target candidate picture of each target element on the first-screen interface comprises:
displaying the target candidate picture of the first target element and the target candidate picture of the second target element on the first-screen interface based on a priority of the first target element and a priority of the second target element, wherein the priority of the first target element is higher than the priority of the second target element, and a display position of the target candidate picture of the first target element is in front of a display position of the target candidate picture of the second target element.

3. The method according to claim 1 or 2, wherein the first target element among the target elements comprises a first sub-element and a second sub-element; and
displaying the target candidate picture of each target element on the first-screen interface comprises:
displaying a picture of the first sub-element and a picture of the second sub-element on the first-screen interface based on a priority of the first sub-element and a priority of the second sub-element, wherein the priority of the first sub-element is higher than the priority of the second sub-element, a display position of the picture of the first sub-element is in front of a display position of the picture of the second sub-element, and the target candidate picture of the first target element comprises the picture of the first sub-element and the picture of the second sub-element.

4. The method according to any one of claims 1 to 3, wherein the method further comprises:
displaying a tab page of the target element on the picture selection interface, or displaying a tab page of a sub-element on the picture selection interface, wherein the tab page of the target element comprises a picture of the target element, and the tab page of the sub-element comprises a picture of the sub-element.

5. The method according to any one of claims 1 to 4, wherein obtaining the target candidate picture set of each target element from the picture set based on the first picture quantity and the target information comprises:
obtaining a candidate picture set of each target element from the picture set based on the target information; and
for each target element, selecting the target candidate picture from the candidate picture set, wherein a quantity of selected target candidate pictures is determined based on the first picture quantity, and the quantity of selected target candidate pictures is a quantity of pictures of the target element that are displayed on the first-screen interface.

6. The method according to claim 5, wherein selecting the target candidate picture from the candidate picture set comprises:
performing similar-picture clustering on the candidate picture set to obtain a similar-picture set;
for each similar-picture set, sorting similar pictures in the similar-picture set, and then selecting a preset quantity of similar pictures that are ranked top, wherein the preset quantity of similar pictures that are ranked top are target similar pictures in the similar-picture set; and
selecting the target candidate picture from the target similar pictures in each similar-picture set and the candidate picture that is not clustered into the similar-picture set.

7. The method according to claim 6, wherein sorting the similar pictures in the similar-picture set comprises:
sorting the similar pictures based on scores of the similar pictures, wherein the scores of the similar pictures are determined based on at least one of compositions, colors, and definition of the similar pictures.

8. The method according to claim 6, wherein on the picture selection interface, a display position of the target similar picture in the similar-picture set is in front of a display position of a non-target similar picture in the similar-picture set.

9. The method according to claim 6, wherein if the target element comprises at least two sub-elements, performing similar-picture clustering on the candidate picture set to obtain the similar-picture set comprises:
separately performing similar-picture clustering on pictures of the sub-elements to obtain a similar-picture set of each sub-element, wherein the candidate picture set comprises the pictures of the sub-elements.

10. The method according to claim 1, wherein the target information is text information obtained based on the interface content of the application.

11. The method according to any one of claims 1 to 10, wherein the target element is an event described in the target information, an object in an event described in the target information, a keyword in the target information, or a category of an object described by a keyword in the target information.

12. The method according to claim 5, wherein the target element is an event described in the target information or an object in an event described in the target information, and obtaining the candidate picture set of each target element from the picture set based on the target information comprises:
extracting event information of the event from the target information; and
performing picture searching in the picture set by using the event information, to obtain the candidate picture set of each event or the object in the event.

13. The method according to claim 12, wherein the method further comprises:
if no picture matching the event information is obtained when picture searching is performed in the picture set based on the event information of the event, performing picture searching in the picture set again based on target event information, wherein the target event information is event information obtained by removing information of one or more dimensions from the event information.

14. The method according to claim 5, wherein the target element is a category of an object described by a keyword in the target information, and obtaining the candidate picture set of each target element from the picture set based on the target information comprises:
performing picture searching based on the keyword in the target information, to obtain a search result of the keyword; and
classifying the search result of the keyword to obtain the target candidate picture set of each category.

15. A picture display method, wherein the method comprises:
displaying an interface of an application;
obtaining target information of the application in response to a target operation on the interface of the application, wherein the target information is related to interface content of the application, and the target operation is used to upload a picture;
obtaining a picture of each target element from a picture set based on the target information, wherein the target element is determined based on the target information;
determining a priority of each of at least two target elements; and
displaying a picture of each target element on a picture selection interface based on the priority of the target element, wherein
the at least two target elements comprise a first target element and a second target element, a priority of the first target element is higher than a priority of the second target element, and a display position of a picture of the first target element on the picture selection interface is in front of a display position of a picture of the second target element on the picture selection interface.

16. The method according to claim 15, wherein the first target element among the target elements comprises a first sub-element and a second sub-element; and
a priority of the first sub-element is higher than a priority of the second sub-element, a display position of a picture of the first sub-element on the picture selection interface is in front of a display position of a picture of the second sub-element on the picture selection interface, and the picture of the target element comprises the picture of the first sub-element and the picture of the second sub-element.

17. The method according to claim 15, wherein obtaining the picture of each target element from the picture set based on the target information comprises:
obtaining a candidate picture set of each target element from the picture set based on the target information;
for each target element, clustering candidate pictures in the candidate picture set of the target element, to obtain at least one similar-picture set;
for each similar-picture set, sorting similar pictures in the similar-picture set, and then selecting a preset quantity of similar pictures that are ranked top, wherein the preset quantity of similar pictures that are ranked top are target similar pictures in the similar-picture set; and
for each target element, selecting the picture of the target element from the target similar pictures in each similar-picture set and the candidate picture that is not clustered into the similar-picture set.

18. An electronic device, comprising a memory, a processor, and a computer program stored in the memory and capable of running in the processor, wherein when the processor executes the computer program, the method according to any one of claims 1 to 14 or claims 15 to 17 is implemented.

19. A computer-readable storage medium, wherein the computer-readable storage medium stores a computer program, and when the computer program is executed by a processor, the method according to any one of claims 1 to 14 or claims 15 to 17 is implemented.
